# EUROPÄISCHE PATENTSCHRIFT

(11) **EP 3 406 549 B1**
(45) Veröffentlichungstag und Bekanntmachung des Hinweises auf die Patenterteilung: **21.12.2022**
(21) Anmeldenummer: 18160415.8
(22) Anmeldetag: 07.03.2018
(51) Int. Cl.: B65G 57/06, B65G 57/24

(54) **VORRICHTUNG UND EIN VERFAHREN ZUM ÜBERFÜHREN MINDESTENS EINER PALETTIERFÄHIGEN LAGE AUF EINE STAPELFLÄCHE**
DEVICE AND METHOD FOR TRANSFERRING AT LEAST ONE PALLETIZABLE LAYER TO A STACKING AREA
DISPOSITIF ET PROCÉDÉ DE TRANSFERT D'AU MOINS UNE COUCHE PALETTISABLE SUR UNE SURFACE D'EMPILEMENT

(30) Priorität: 23.05.2017 DE 102017208753
(43) Veröffentlichungstag der Anmeldung: 28.11.2018
(73) Patentinhaber: Krones Aktiengesellschaft, 93073 Neutraubling (DE)
(72) Erfinder: MAIER, Stefan, 93073 Neutraubling (DE); PERL, Kurt, 93073 Neutraubling (DE); ZEINER, Peter, 93073 Neutraubling (DE); SCHUHBAUER, Richard, 93073 Neutraubling (DE)
(74) Vertreter: Benninger, Johannes

(56) Entgegenhaltungen:
- EP-A2- 0 257 447
- DE-A1-102010 011 534
- US-A1- 2010 284 775
- US-A1- 2013 160 403

## Beschreibung

Überführen mindestens einer palettierfähigen Lage auf eine Ablage- und/oder Stapelfläche gemäß den Merkmalen der Oberbegriffe der Ansprüche 1 und 6. Zur Palettierung von gesamten Artikellagen durchlaufen die Artikel normalerweise zunächst eine Gruppierstation, in der die transportierten Artikel zu palettierfähigen Lagen zusammengestellt werden. Diese palettierfähigen Lagen werden dann von einer Bereitstellungsstation an eine Beladestation überführt. Die Beladestation legt diese Artikellagen dann an einem gewünschten Ort ab. Dieser Ort wird meist durch einen Stapelplatz und eine darauf befindliche Palette gebildet, auf der die Artikellagen abgelegt werden können. Die Bereitstellungsstation und die Gruppierstation stellen meist eine Einheit dar und sind unmittelbar miteinander gekoppelt.

Die Bereitstellungstation umfasst ebenso wie die Gruppierstation eine Auflagefläche oder Auflageebene, auf der die Artikel gruppiert und zu einer Lage zusammengestellt werden. Die Beladestation umfasst ebenso eine Auflageebene auf welcher eine jeweilige palettierfähige Lage zum Überführen an eine jeweilige zugeordnete Palette aufstehen kann. Dem Fachmann sind für die Ausgestaltung der Auflageebene zahlreiche Varianten bekannt, wie z.B. Jalousiegreiferköpfe oder ähnliches. Dabei verläuft ein solches Palettierverfahren mit einer aus dem Stand der Technik bekannten Palettiervorrichtung in einer Weise an, dass zunächst Artikel mittels einer Gruppiereinrichtung zu einer palettierfähigen Lage zusammengestellt werden und im Anschluss daran von einem Bereitstellungsplatz bzw. einer Bereitstellungsstation in die Beladestation übergeben werden. Hierzu kann es sein, dass die Beladestation, wie z.B. ein an einem Hubwerk oder auch Roboter angeordneter Jalousiegreiferkopf, sich an den Bereitstellungsplatz unmittelbar anschließt, damit die Überführung der Artikellage in die Beladestation erfolgen kann. Dabei verweilt der Jalousiegreiferkopf bzw. die Beladestation so lange an Ort und Stelle, bis die Lage vollständig von der Bereitstellungsstation in die Beladestation übergeben wurde. Befindet sich die Artikellage vollständig in der Beladestation, so positioniert die Beladestation durch horizontale und vertikale Bewegungen die Artikellage an einem gewünschten Abgabeort, meist auf einer auf einem Stapelplatz bereitgestellten Palette. Im Anschluss daran erfolgt die gleiche Prozedur erneut so lange, bis die gewünschte Anzahl an Lagen auf der Palette abgelegt wurde.

So offenbart beispielsweise die EP 1 321 396 A1 eine Palettiervorrichtung, bei der Artikel in ungeordneter Weise von einer Horizontalfördereinrichtung in seitlicher Richtung verschoben und dabei gruppiert werden, bevor sie in kompletten Lagen auf eine Hubeinrichtung überführt werden. Die Hubeinrichtung bzw. Transferplattform dient dabei als Höhenausgleich zwischen der Gruppierstation und der Beladestation, welche die Lagen übereinander stapelt und mittels eines zu öffnenden Rollbodens auf einer Palette ablegt. Das Dokument offenbart weiterhin, dass die Transferplattform nicht in einer einzigen Bewegungsphase eine Anzahl an Reihen von Artikeln aufnehmen und überführen kann, welche zur Bildung einer vollständigen Artikellage notwendig ist. Der Vorteil wird dabei darin gesehen, dass bedingt durch die kleinere Bauart der Transferplattform und das nicht vollständige Anheben einer gesamten Artikellage weniger Gewicht angehoben werden muss und somit weniger Energieverbrauch stattfindet als bei dem Anheben der Beladestation an sich.

Um palettierfähige Lagen an eine Palette überführen zu können, benötigen Vorrichtungen gemäß EP-Offenlegungsschrift einen hohen Zeitaufwand. In der Praxis sind Vorrichtungen wünschenswert, mittels welchen eine Überführung von palettierfähigen Lagen auf Paletten mit hohem Durchsatz erfolgen kann.

Die EP 2 103 556 B2 beschreibt eine Palettiervorrichtung mit einem geteilten Ladeblech, wobei die zwei Teilladebleche zum Entladen auseinander gefahren werden, wodurch das gewünschte, an den Außenkanten präzise Stapelbild erzeugt wird. Zum Beladen wird auf ein Wiederzusammenfahren der Ladebleche verzichtet. Stattdessen wird beim Beladen mit auseinandergefahrenen Teilladeblechen gearbeitet, wodurch die Taktzeiten beträchtlich verkürzt werden können und die Palettierleistung entsprechend erhöht werden kann.

Die DE 10 2010 011 531 A1 beschreibt eine Vorrichtung zum Beladen von Paletten mit Stückgut unter Ausbildung eines mehrere Stückgutauflagen aufweisenden Stückgutstapels, mit einer Bereitstellungsposition zum Bereitstellen jeweils einer Stückgutlage oder einer Stückgutteillage. Die Vorrichtung umfasst eine Umsetzeinrichtung zum Aufnehmen der Stückgutlage oder der Stückgutteillage an der Bereitstellungsposition und zum Absetzen der aufgenommenen Stückgutlage oder Stückgutteillage auf eine Ablageebene. Die Umsetzeinrichtung besteht aus zwei Aufnahmeelementen, welchen Aufnahmeelementen jeweils Hubantriebe zugeordnet sind; d.h. die Aufnahmeelemente sind unabhängig voneinander verfahrbar und/oder steuerbar ausgebildet.

EP 0 257 447 A2 offenbart eine Vorrichtung nach dem Oberbegriff des Anspruchs 1 und ein Verfahren nach dem Oberbegriff des Anspruchs 6, wobei die erste Ladeeinheit, die zweite Ladeeinheit und die Anlagebalken, bzw. der Lagenschieber und der Lagenanschlag, jeweils beidseitig an einem vertikal beweglichen Hubschlitten aufgehängt und gelagert sind.

Die Aufgabe der Erfindung besteht darin, die Palettierung von Stückgutlagen noch weiter in Bezug auf Schnelligkeit und Präzision zu optimieren.

Die obige Aufgabe wird durch eine Vorrichtung und ein Verfahren zum Überführen mindestens einer palettierfähigen Lage auf eine Ablage- und/oder Stapelfläche gelöst, die die Merkmale in den unabhängigen Patentansprüchen umfassen. Weitere vorteilhafte Ausgestaltungen werden durch die Unteransprüche beschrieben.

Zur Erreichung des genannten Ziels beschreibt die vorliegende Erfindung zunächst ein Verfahren zum Überführen mindestens einer palettierfähigen Lage auf eine Ablage- und/oder Stapelfläche mit den nachfolgenden Schritten, wobei die folgenden Schritte in der angegebenen oder einer davon abweichenden Reihenfolge stattfinden und/oder aufeinander folgen können. Was im vorliegenden Zusammenhang als Ablage- und/oder Stapelfläche bezeichnet ist, kann in der Praxis insbesondere durch eine Palette gebildet sein, auf die mehrere solcher Lagen mit Stückgütern übereinander abgelegt werden können, um die solchermaßen beladene Palette anschließend weiteren Handhabungs- und/oder Verpackungsschritten zuzuführen. Bei dem Verfahren wird zunächst mindestens eine palettierfähige Lage bereitgestellt, die durch eine Mehrzahl von Stückgütern gebildet ist, die innerhalb eines definierten Raumes angeordnet sind. Insbesondere können die Stückgüter in einem definierten Lagenbild bzw. in definierter Lagenanordnung gruppiert und mit minimalen Abständen voneinander zusammengeschoben sein, so dass sie eine definierte Fläche überdecken und weitgehend lückenlos als komplette Lage auf die Palette bzw. auf die oben genannte Ablage- und/oder Stapelfläche überführt und abgelegt werden können.

Das hier beschriebene Verfahren dient somit insbesondere und in erster Linie dem Überführen einer palettierfähigen Lage auf eine zugeordnete Palette und umfasst darüber hinaus mehrere begleitende Verfahrensschritte. So wird im Rahmen eines ersten Schrittes eine palettierfähige Lage, welche eine Vielzahl an Stückgütern umfasst, bereitgestellt. Es kann hierbei sein, dass Stückgüter durch Drehen und/oder Verschieben in eine definierte Ausrichtung zueinander gebracht werden, wodurch eine palettierfähige Lage aus den Stückgütern hergestellt bzw. erzeugt wird. Die palettierfähige Lage aus den Stückgütern kann somit bspw. in einer der Beladestation in Transportrichtung vorgeordneten Gruppierstation hergestellt bzw. erzeugt werden. Somit kann es sein, dass die jeweilige palettierfähige Lage z.B. auf einem Gruppiertisch der Gruppierstation bereitgestellt bzw. dargeboten wird. Der Gruppiertisch kann eine horizontale Aufstandsfläche ausbilden, auf welcher eine jeweilige palettierfähige Lage bereitgestellt wird.

Die Stückgüter, wie sie als Bestandteil der palettierfähigen Lage im Rahmen der vorliegenden Erfindung auf eine zugeordnete Palette überführt werden, können beispielsweise jeweils durch mehrere zu einem jeweiligen Gebinde zusammengefasste Getränkebehältnisse gebildet sein. Auch können die Stückgüter jeweils als mehrere über mindestens eine jeweilige Umverpackung zusammengefasste Dosen ausgebildet sein. Die als Bestandteil eines Gebindes ausgebildeten Getränkebehältnisse bzw. die über mindestens eine Umverpackung zusammengefassten Dosen können ggf. auf einer Unterlage bzw. einem Tray aufstehen.

Im Rahmen des hier beschriebenen Verfahrens wird jede einzelne der zuvor bereitgestellten palettierfähigen Lagen an eine erste Ladeeinheit überführt oder überschoben, welche einen Bestandteil einer Beladestation bildet und welche die palettierfähige Lage vollständig aufnimmt. Damit ist jedoch nicht zwingend gemeint, dass immer nur einzelne Lagen in die Beladestation überschoben oder überführt werden, um anschließend als einzelne Lagen nacheinander gestapelt und/oder auf der Palette abgelegt zu werden. Grundsätzlich können auch Doppel- oder Dreifachlagen gehandhabt werden, bei denen jeweils zwei Stückgutreihen oder drei Stückgutreihen übereinander liegend befördert und gehandhabt werden können.

Wenn die mindestens eine palettierfähige Lage auf der ersten Ladeeinheit aufgenommen ist, kann sich diese erste Ladeeinheit mitsamt der darauf aufgenommenen palettierfähigen Lage in Richtung einer zweiten Ladeeinheit bewegen, die einen weiteren Bestandteil der Beladestation bildet. Es kann auch vorgesehen oder damit gemeint sein, dass die durch die erste Ladeeinheit aufgenommene palettierfähige Lage in Richtung der zweiten Ladeeinheit bewegt wird, wobei die durch die erste Ladeeinheit vollständig aufgenommene palettierfähige Lage teilweise auf die zweite Ladeeinheit übertritt und von der ersten Ladeeinheit und der zweiten Ladeeinheit gemeinsam getragen wird, wonach sich zum Absetzen der vollständigen palettierfähigen Lage auf der Ablage- und/oder Stapelfläche und/oder auf einer Oberseite einer zuvor dort abgelegten und bereits palettierten Lage die erste Ladeeinheit und die zweite Ladeeinheit voneinander distanzieren, wobei der dadurch gebildete Abstand zwischen der ersten Ladeeinheit und der zweiten Ladeeinheit zumindest einer Breite der zuvor darauf befindlichen palettierfähigen Lage entspricht.

Weiterhin sieht das Verfahren vor, dass zumindest während des Auseinanderbewegens der ersten Ladeeinheit und der zweiten Ladeeinheit zum Zwecke des Absetzens der palettierfähigen Lage an beiden Längsseiten der jeweiligen Lage, die sich quer zur Transportrichtung beim Überführen der Lage auf die erste Ladeeinheit befinden, jeweils bewegliche Anlagebalken angreifen und die Lage während des Absetzens der Lage auf der Ablage- und/oder Stapelfläche und/oder auf einer Oberseite einer zuvor dort abgelegten und bereits palettierten Lage beidseitig stützen und/oder stabilisieren. Außerdem ist bei dem Verfahren vorgesehen, dass die beidseitig der abzusetzenden und/oder abgesetzten Lage angreifenden Anlagebalken zumindest phasenweise nichtsynchron und/oder unabhängig voneinander beweglich sind oder bewegt werden, insbesondere in Bewegungsrichtungen parallel zur Transportrichtung der Überführbewegung der Lage auf die erste Ladeeinheit.

Unabhängig von einer in Transportrichtung der Beladestation vorgeordneten Station zur Lagenbildung kann die bereitgestellte palettierfähige Lage bspw. durch eine geeignete Beladestation aufgenommen oder abgeholt und von der Beladestation an die erste Ladeeinheit übergeben werden, die zuvor als Bestandteil der Beladestation definiert wurde, wobei die erste Ladeeinheit dazu ausgestattet ist, die palettierfähige Lage vollständig aufnehmen zu können. Um ein ungewolltes Kippen einzelner Stückgüter der bereitgestellten palettierfähigen Lage bei Abholen durch die Beladestation zu vermeiden, haben sich in der Praxis Ausführungsformen bewährt, bei welchen sich eine durch die Beladestation ausgebildete Auflageebene beim Abholen oder Überführen der bereitgestellten palettierfähigen Lage zumindest näherungsweise auf gleichem vertikalem Höhenniveau gegenüber einem vertikalen Höhenniveau einer horizontalen Aufstandsfläche eines die palettierfähige Lage bereitstellenden Gruppiertisches o. dgl. befindet. Weiter haben sich Ausführungsformen bewährt, bei welchen die Beladestation bei Abholen der bereitgestellten palettierfähigen Lage keinen oder lediglich einen geringen horizontalen Abstand zu dem die palettierfähige Lage bereitstellenden Gruppiertisch besitzt. Auch hierdurch kann das Risiko eines ungewollten Kippens einzelner Stückgüter der palettierfähigen Lage bei Übertritt vom Gruppiertisch auf die Beladestation gering gehalten werden.

Ebenso kann es sein, dass eine durch die Beladestation ausgebildete Auflageebene sich bei Übergabe der jeweiligen vollständig aufgenommenen palettierfähigen Lage an die erste Ladeeinheit zumindest näherungsweise auf gleichem vertikalem Höhenniveau gegenüber einem vertikalen Höhenniveau einer Aufstandsfläche der ersten Ladeeinheit befindet. Zudem kann es sein, dass die Beladestation bei Übergabe der jeweiligen palettierfähigen Lage an die erste Ladeeinheit keinen oder lediglich einen geringen horizontalen Abstand gegenüber der ersten Ladeeinheit besitzt, um das Risiko eines ungewollten Kippens einzelner Stückgüter der palettierfähigen Lage bei Übergabe an die erste Ladeeinheit gering zu halten.

Es ist zudem vorgesehen, dass die durch die erste Ladeeinheit aufgenommene palettierfähige Lage in Richtung der zweiten, ebenfalls als Bestandteil der Beladestation ausgebildeten Ladeeinheit bewegt wird, so dass die durch die erste Ladeeinheit aufgenommene palettierfähige Lage teilweise auf die zweite Ladeeinheit übertritt und von der ersten Ladeeinheit und der zweiten Ladeeinheit gemeinsam getragen wird.

Hierbei kann es sein, dass die erste Ladeeinheit und die zweite Ladeeinheit zeitlich vor dem teilweisen Übertritt der palettierfähigen Lage eine Zustellbewegung ausführen. Die erste Ladeeinheit und die zweite Ladeeinheit können im Rahmen der Zustellbewegung ihren relativen Abstand zueinander verkleinern. Insbesondere ist vorgesehen, dass die erste Ladeeinheit und die zweite Ladeeinheit im Rahmen der Zustellbewegung aufeinander zubewegt werden, bis die erste Ladeeinheit und die zweite Ladeeinheit miteinander in Kontakt treten oder bis zwischen der ersten Ladeeinheit und der zweiten Ladeeinheit lediglich ein geringer Abstand bzw. Spalt ausgebildet ist. Für die Zustellbewegung können die erste Ladeeinheit und die zweite Ladeeinheit jeweils in horizontaler Richtung bzw. mit einer horizontalen Richtungskomponente aufeinander zubewegt werden. Bewährt haben sich in der Praxis Ausführungsformen, bei welchen die erste Ladeeinheit und die zweite Ladeeinheit im Rahmen der Zustellbewegung lediglich in horizontaler Richtung bzw. mit einer horizontalen Richtungskomponente bewegt werden, wobei eine Bewegung der ersten Ladeeinheit und der zweiten Ladeeinheit in vertikaler Richtung zeitlich während der Zustellbewegung unterbleibt. Mittels der Zustellbewegung können die erste Ladeeinheit und die zweite Ladeeinheit ggf. in eine bestimmte Relativposition gelangen. Es kann vorgesehen sein, dass die palettierfähige Lage teilweise von der ersten Ladeeinheit auf die zweite Ladeeinheit übertritt, wobei die erste Ladeeinheit und die zweite Ladeeinheit zeitlich während des teilweisen Übertritts der palettierfähigen Lage von der ersten Ladeeinheit auf die zweite Ladeeinheit ihre bestimmte Relativposition beibehalten.

Um bei diesem Zusammenschieben der Ladeeinheiten, dem gleichzeitig die teilweise Überführung der Lage von der längeren ersten Ladeeinheit auf die kürzere zweite Ladeeinheit überlagert ist, die Stückgüter der Lage zu stabilisieren und die gesamte Lage in ihrer Anordnung zu halten, werden die oben genannten Anlagebalken unterstützend eingesetzt, die zumindest an zwei Seiten der Lage angreifen und diese beim Übertritt eines Teils der Lage auf die zweite Ladeeinheit zu stabilisieren.

Nachdem die Ladeeinheiten solchermaßen zusammengeschoben wurden und die Lage in Teilen auf die kurze zweite Ladeeinheit überschoben wurde, vergrößern die erste Ladeeinheit und die zweite Ladeeinheit ihren relativen Abstand zueinander, woraus resultierend die gemeinsam von der ersten Ladeeinheit und der zweiten Ladeeinheit getragene palettierfähige Lage auf den vorgesehenen Stapel- und/oder Ablageplatz bzw. auf einer zugeordneten Palette abgesetzt wird. Die erste Ladeeinheit und die zweite Ladeeinheit können jeweils eine Auflageebene ausbilden, wobei die jeweilige palettierfähige Lage während des gemeinsamen Tragens auf der Auflageebene der ersten Ladeeinheit und auf der Auflageebene der zweiten Ladeeinheit aufsteht. Bei Vergrößerung des relativen Abstandes der ersten Ladeeinheit gegenüber der zweiten Ladeeinheit kann die palettierfähige Lage gleitend über die Auflageebene der ersten Ladeeinheit sowie die Auflageebene der zweiten Ladeeinheit bewegt werden. Es haben sich zudem Ausführungsformen bewährt, bei welchen die palettierfähige Lage ihren Kontakt zur ersten Ladeeinheit und ihren Kontakt zur zweiten Ladeeinheit zumindest näherungsweise zeitgleich verliert.

Es ist auch vorgesehen, dass die Beladestation die abgeholte palettierfähige Lage der ersten als Bestandteil der Beladestation ausgebildeten Ladeeinheit zur Übergabe in vertikaler Richtung entgegenbringt. Hierdurch wird ein Verfahren bereitgestellt, welches sich durch einen hohen Durchsatz auszeichnet bzw. mittels welchen Verfahrens palettierfähige Lage in hoher Anzahl je Zeiteinheit auf Paletten überführt werden können.

In bevorzugten Ausführungsformen kann es sein, dass die Beladestation eine weitere palettierfähige Lage abholt und spätestens unmittelbar nach vollständigem Absetzen der jeweiligen palettierfähigen Lage durch die Beladestation ein vertikales Niveau der ersten Ladeeinheit erreicht. Vorteilhafterweise kann hierdurch unmittelbar nach Absetzen der palettierfähigen Lage die weitere palettierfähige Lage von der Beladestation an die erste Ladeeinheit übergeben werden. Derartige Ausführungsformen zeichnen sich daher durch einen hohen Durchsatz bei der Überführung von palettierfähigen Lagen auf Paletten aus.

Eine bevorzugte Variante des erfindungsgemäßen Verfahrens sieht vor, dass zumindest ein die Lage in Richtung zur zweiten Ladeeinheit schiebender Anlagebalken durch wenigstens einen ein- oder mehrteiligen Lagenschieber gebildet ist. Dieser ein- oder mehrteilige Lagenschieber ist dazu vorgesehen und ausgestattet, die Lage in Richtung zur zweiten Ladeeinheit zu schieben und/oder zu überführen, wenn sich die Ladeeinheiten unter Reduzierung eines zuvor für das Ablegen einer vollständigen Lage auf dem Stapelplatz oder der Palette notwendigen Abstandes zueinander bewegen, wobei gleichzeitig die kürzere Ladeeinheit einen Teil der Lage aufnimmt. Hinsichtlich der typischen Größenverhältnisse kann bspw. vorgesehen sein, dass die erste Ladeeinheit in etwa die Fläche der aufzunehmenden Lage aufweist bzw. etwas größer ist als die Grundfläche der darauf abzulegenden Lage mit Stückgütern, während die zweite Ladeeinheit in etwa die halbe Breite aufweist, so dass die Lage ungefähr zur Hälfte auf die zweite Ladeeinheit überschoben und gleichzeitig ungefähr zur Hälfte von der ersten Ladeeinheit seitlich verschoben werden kann. Da sich in diesem Zustand der Spalt zwischen den beiden unmittelbar aneinander liegenden Ladeeinheiten ungefähr mittig unterhalb der vollständigen Lage befindet, kann das anschließende Auseinanderbewegen der beiden Ladeeinheiten zu einem gleichmäßigen und weitgehend symmetrischen Ablegen der Lage auf den darunter liegenden Lagenplatz, Palettenplatz, Stapelplatz etc. genutzt werden.

Dieses gleichmäßige Ablegen der vollständigen Lage wird außerdem unterstützt, indem zumindest ein an die Lage anlegbarer und der sich in Richtung zur zweiten Ladeeinheit bewegenden Lage vorauseilender oder zumindest temporär oder phasenweise dort anliegender Anlagebalken durch wenigstens einen ein- oder mehrteiligen Lagenanschlag gebildet ist. Hierbei kann vorgesehen sein, dass der wenigstens eine ein- oder mehrteilige Lagenanschlag die Lage während ihres Überschiebens in Richtung zur zweiten Ladeeinheit stabilisiert und einzelne Artikel am Umkippen hindert. Außerdem sieht das Verfahren vor, dass der an einer Seite der Lage anliegende Lagenschieber sowie der an der gegenüber liegenden Seite der Lage anliegende Lagenanschlag gemeinsam die Lage fixieren, wenn die Ladeeinheiten zum Absetzen der Lage auseinander gefahren werden.

Eine Besonderheit des erfindungsgemäßen Verfahrens besteht darin, dass der Lagenanschlag und der Lagenschieber zwar einerseits zumindest phasenweise synchron zueinander in dieselbe Richtung bewegt werden können, dass aber grundsätzlich eine unabhängige Bewegung der beiden Anlagebalken, die durch Lagenanschlag und Lagenschieber gebildet sein können, möglich ist. Während bei bisher bekannten Anordnungen eine gekoppelte Bewegung solcher Anlagebalken und/oder Schieber vorgesehen ist, was weniger Freiheitsgrade beim Überführen und Absetzen der Lagen bietet, erlauben es die unabhängigen Steuerungsmöglichkeiten des Lagenanschlags vom Lagenschieber und umgekehrt, auf kleinem Raum präzise Handhabungsschritte beim Überführen, Ablegen und Stapeln der Lagen auszuführen. Dadurch, dass der Lagenanschlag dazu vorgesehen sein soll, über längere Bewegungsphasen bzw. ständig an der Lage anzuliegen, benötigt er zumindest phasenweise während des Überschiebens und Absetzens einer vollständigen Lage auf die Ladeeinheiten und von diesen Ladeeinheiten ein anderes Bewegungsprofil als der Lagenschieber. Aufgrund der unabhängigen Bewegungssteuerungen des Lagenschiebers und des Lagenanschlags können die jeweils optimalen Positionen für eine schnelle und störungsfreie Handhabung der zu stapelnden Lagen angewählt werden.

Durch gemeinsame Aufhängung und Lagerung der Anlagebalken bzw. des Lagenschieber und des Lagenanschlag an einer vertikal beweglichen Quertraverse, an der die auch Beladeplatten genannten Ladeeinheiten aufgehängt sind, sind diese unabhängigen Steuerungsmöglichkeiten für die Bewegungssteuerungen der Schieber gegeben. Die Quertraverse, welche die Ladeeinheiten sowie die Anlagebalken trägt, kann vorzugsweise an einer Hubsäule mit vertikaler Längserstreckungsrichtung vertikal beweglich gelagert sein, wobei auch die übrigen Teile mit horizontalen Bewegungskomponenten an der Quertraverse beweglich aufgehängt sein können. Außerdem kann vorgesehen sein, dass der Lagenschieber wahlweise bzw. bedarfsweise über die Lage geschwenkt werden kann, so dass er nicht mit einer Lage kollidiert, die von einer vorgeordneten Station auf die Beladestation überschoben wird. So kann der Beladeeinheit bspw. eine Transfereinheit vorgeordnet sein, die weitere palettierfähige Lagen anliefert, die anschließend in der Beladeeinheit in der beschriebenen Weise gestapelt werden.

Zur Erreichung des oben genannten Ziels schlägt die Erfindung neben dem in verschiedenen Ausführungsvarianten beschriebenen Verfahren weiterhin eine Vorrichtung zum Überführen mindestens einer palettierfähigen Lage auf eine Ablage- und/oder Stapelfläche vor, wobei diese Stapelfläche insbesondere durch eine Palette gebildet sein kann. Die mit der vorliegenden Erfindung vorgeschlagene Vorrichtung umfasst eine Bereitstellungsposition für mindestens eine palettierfähige Lage, wobei jede solcher Lagen gebildet ist durch eine Mehrzahl von Stückgütern, die innerhalb eines definierten Raumes angeordnet sind. Zudem umfasst die Vorrichtung eine Beladestation, die durch eine erste Ladeeinheit und eine zweite Ladeeinheit gebildet ist, wobei die erste Ladeeinheit zur Aufnahme einer vollständigen palettierfähigen Lage ausgebildet ist. Dabei ist vorgesehen, dass die auf der ersten Ladeeinheit aufgenommene palettierfähige Lage teilweise von der ersten Ladeeinheit auf die zweite Ladeeinheit überführbar und/oder bewegbar ist, so dass die durch die erste Ladeeinheit vollständig aufgenommene palettierfähige Lage im Laufe des Stapelprozesses teilweise auf die zweite Ladeeinheit übertritt und von der ersten Ladeeinheit und der zweiten Ladeeinheit gemeinsam getragen wird.

Wahlweise kann der Beladestation ein geeignetes Lagenvorbereitungs- und/oder Lagenbereitstellungsmodul zugeordnet, d.h. in Transportrichtung der aus den Stückgütern gebildeten Lagen vorgeordnet, sein. Über dieses Modul bzw. über diese Module werden jeweils nacheinander die palettierfähigen und jeweils eine Mehrzahl oder Vielzahl von Stückgütern aufweisenden Lage dargeboten und zur Beladestation weitergegeben. Die Bereitstellung kann als Bestandteil einer Gruppierstation bzw. als Gruppiertisch ausgebildet sein. Außerdem kann die Bereitstellung sinnvollerweise eine horizontale Aufstandsfläche für eine jeweilige palettierfähige Lage ausbilden bzw. zur Verfügung stellen.

Zum Absetzen der vollständigen palettierfähigen Lage auf der Ablage- und/oder Stapelfläche und/oder auf einer Oberseite einer zuvor dort abgelegten und bereits palettierten Lage sind die erste Ladeeinheit und die zweite Ladeeinheit voneinander distanzierbar bzw. können auseinanderbewegt werden, wobei der dadurch ausbildbare minimale Abstand zwischen der ersten Ladeeinheit und der zweiten Ladeeinheit zumindest einer Breite der zuvor darauf befindlichen palettierfähigen Lage entspricht. Der ersten Ladeeinheit sowie der zweiten Ladeeinheit sind jeweils bewegliche Anlagebalken zur Stabilisierung und/oder zum Überschieben der Lage zugeordnet, wobei die beidseitig der abzusetzenden und/oder abgesetzten Lage angreifenden Anlagebalken zumindest phasenweise nichtsynchron und/oder unabhängig voneinander beweglich sind, insbesondere in Bewegungsrichtungen parallel zur Transportrichtung der Überführbewegung der Lage auf die erste Ladeeinheit.

Die Beladestation der erfindungsgemäßen Vorrichtung zum Überführen mindestens einer palettierfähigen Lage auf die Ablage- und/oder Stapelfläche bzw. auf die bereitstehende Palette umfasst die erwähnte erste Ladeeinheit sowie die ebenfalls erwähnte zweite Ladeeinheit. Die hinsichtlich ihrer Anordnung, Belastbarkeit und Dimensionierung zur Aufnahme einer vollständigen palettierfähigen Lage ausgebildete erste Ladeeinheit wird nachfolgend auch als Ganzschicht-Beladeplatte bezeichnet. Dagegen ist die der ersten Ladeeinheit in Transportrichtung nachgeordnete zweite Ladeeinheit kleiner bzw. umfasst eine kleinere Auflagefläche und ist daher nur zur teilweisen Aufnahme einer vollständigen palettierfähigen Lage ausgebildet. Insbesondere kann vorgesehen sein, dass die zweite Ladeeinheit jeweils nur eine halbe palettierfähige Lage aufnimmt; sie wird deshalb nachfolgend auch als Halbschicht-Beladeplatte bezeichnet. Die erste Ladeeinheit kann eine Auflageebene ausbilden, auf welcher eine vollständige palettierfähige Lage aufgenommen werden kann. Weiter ist eine vollständig aufgenommene palettierfähige Lage teilweise von der ersten Ladeeinheit an die zweite Ladeeinheit weiterführbar, so dass die palettierfähige Lage in dieser Prozessphase, die dem Ablagevorgang auf der Palette vorausgeht, gemeinsam von der ersten Ladeeinheit und der zweiten Ladeeinheit getragen wird.

Die Beladestation ist bspw. über einen an einer Hubsäule angeordneten Hubschlitten höhenverstellbar ausgebildet. Somit kann die Höhe der ersten und zweiten Ladeeinheit einfach an die Höhe der zu beladenden Palette angepasst werden, da diese mit jeder auf der Palette angeordneten Lage zunimmt. Sinnvollerweise werden die beiden Ladeeinheiten jeweils synchron in der Höhe verstellt, da ein nichtsynchroner Hubvorgang mit einer darauf befindlichen Lage nicht sinnvoll durchführbar ist.

Eine bevorzugte Ausführungsvariante der erfindungsgemäßen Vorrichtung sieht vor, dass zumindest ein die Lage in Richtung zur zweiten Ladeeinheit schiebender Anlagebalken durch wenigstens einen ein- oder mehrteiligen Lagenschieber gebildet ist. Dieser eine ein- oder mehrteilige Lagenschieber kann jeweils eine Lage in Richtung zur zweiten Ladeeinheit schieben und/oder überführen.

Einer dieser wenigstens zwei genannten und der Beladestation zugeordneten Anlagebalken kann als Schubbalken dienen, der insbesondere dafür vorgesehen ist, um die vollständig von der ersten Ladeeinheit aufgenommene palettierfähige Lage teilweise von der ersten Ladeeinheit auf die zweite Ladeeinheit überzuschieben. Der Anlage- oder Schubbalken ist räumlich der ersten Ladeeinheit zugeordnet und kann insbesondere einen Bewegungsraum parallel zur Auflagefläche der ersten Ladeeinheit abdecken, der in etwa auch der Breite der Lage bzw. der Länge der ersten Ladeeinheit in Transportrichtung der Lagen entspricht. Wenn in diesem Zusammenhang teilweise auch von einer horizontalen Verschiebbarkeit die Rede ist, so meint dies die gegenüber der vertikal verstellbaren, aber auch in horizontaler Richtung verschiebbaren ersten Ladeeinheit parallele Verschiebbarkeit zur Auflagefläche der ersten Ladeeinheit. Weiterhin kann vorgesehen sein, dass der Anlagebalken oder Schubbalken über ein Drehgelenk o. dgl. von der ersten Ladeeinheit weggeschwenkt oder bspw. über einen kurzen Hubweg nach oben verschoben werden kann. Dies ist insbesondere notwendig, um den Überschub einer weiteren palettierfähigen Lage vom Lagenvorbereitungs- und/oder Lagenbereitstellungsmodul zu ermöglichen, so dass in diesem Fall die neue Lage unter dem nach oben geschwenkten oder nach oben verstelltem Anlage- oder Schubbalken hindurch auf die erste Ladeeinheit geschoben werden kann.

Bei der Vorrichtung kann zudem vorgesehen sein, dass zumindest ein an die Lage anlegbarer und der sich in Richtung zur zweiten Ladeeinheit bewegenden Lage vorauseilender oder zumindest temporär oder phasenweise dort anliegender Anlagebalken durch wenigstens einen ein- oder mehrteiligen Lagenanschlag gebildet ist. Dieser ein- oder mehrteilige Lagenanschlag kann die Lage während ihres Überschiebens in Richtung zur zweiten Ladeeinheit stabilisieren und einzelne Artikel der Lage ggf. am Umkippen hindern, besonders bei schnellen Überschubvorgängen mit den damit einhergehenden abrupten Beschleunigungen und Verzögerungen. Der an einer Seite der Lage anliegende Lagenschieber sowie der an der gegenüber liegenden Seite der Lage anliegende Lagenanschlag können gemeinsam die Lage fixieren, wenn die Ladeeinheiten zum Absetzen der Lage auseinander gefahren werden.

Der auch als Lagenanschlag bezeichnete Anlagebalken ist normalerweise in etwa parallel zum Schubbalken oder Lagenschieber angeordnet. In der Regel ist der Schubbalken oder Lagenschieber der ersten Ladeeinheit und der Lagenanschlag der zweiten Ladeeinheit zugeordnet, womit in erster Linie die räumliche Zuordnung gemeint ist. Der Lagenanschlag kann in Richtung des Schubbalkens oder Lagenschiebers oder vom Schubbalken oder Lagenschieber weg bewegt werden. Hierfür ist dem Lagenanschlag ein eigener Antrieb zugeordnet, so dass der Schubbalken oder Lagenschieber und der Lagenanschlag jeweils individuell und unabhängig voneinander bewegt werden können. Im Gegensatz zu Ausführungsformen, bei der eine gekoppelte entgegengesetzt gerichtete Bewegung von Lagenanschlag und Schubeinheit erfolgt, kann ein solcher individuell steuerbarer Lagenanschlag vorzeitig an der dem Schubbalken gegenüberliegenden Seite einer palettierfähigen Lage angreifen und somit die palettierfähige Lage zumindest teilweise während des Überschubprozesses von der ersten zur zweiten Ladeeinheit unterstützen und absichern, was zur deutlichen Verbesserung der Lagenstabilität beim Überschieben der jeweiligen Lage beiträgt.

Wahlweise kann vorgesehen sein, dass der Lagenanschlag und der Lagenschieber zumindest phasenweise synchron zueinander in dieselbe Richtung bewegt werden. Bei anderen Bewegungsphasen erfolgen dagegen eine nichtsynchrone Bewegung bzw. voneinander unabhängige Relativbewegungen der beiden Schieber zueinander.

Der Lagenanschlag und/oder der Lagenschieber können zumindest bereichsweise beweglich an einer Führungsschiene angeordnet sein, so dass zumindest bereichsweise eine geführte lineare Bewegung möglich ist. Beispielsweise kann vorgesehen sein, dass der Lagenanschlag und/oder der Lagenschieber jeweils über einen Riemenantrieb angetrieben werden, wobei der Verlauf des Riemens das Bewegungsmuster von Lagenanschlag und/oder Lagenschieber definiert.

Erfindungsgemäß sind die Anlagebalken bzw. der Lagenschieber und der Lagenanschlag jeweils an einer vertikal beweglichen Quertraverse aufgehängt und gelagert, an der auch die Beladeplatten aufgehängt sind. Diese Quertraverse kann bspw. an einer Hubsäule mit vertikaler Längserstreckungsrichtung vertikal beweglich gelagert sein, wobei auch weitere Teile bzw. die übrigen Teile mit horizontalen Bewegungskomponenten an der Quertraverse beweglich aufgehängt sein können.

Die erste Ladeeinheit und die zweite Ladeeinheit sind somit durch die gemeinsame Aufhängung an einer höhenverstellbaren Quertraverse mechanisch aneinander gekoppelt, so dass die erste Ladeeinheit und die zweite Ladeeinheit in vertikaler Richtung nicht relativ zueinander bewegt werden können. Weiterhin können die erste Ladeeinheit und die zweite Ladeeinheit derart mechanisch aneinander gekoppelt sein, dass sie jeweils eine in einer horizontalen Ebene entgegengesetzt gerichtete Bewegung durchführen können, insbesondere eine Bewegung aufeinander zu oder voneinander weg.

Die Vorrichtung kann zudem vorsehen, dass der Lagenschieber auch wahlweise über die Lage geschwenkt oder über das Höhenniveau der Lage gehoben werden kann, so dass eine Lage darunter hindurch bewegt werden kann, bevor der Lagenschieber wieder rückseitig in Transportrichtung an der Lage angreift und diese weiterbefördert.

Gemäß verschiedener mit der Vorrichtung durchzuführender Verfahren wird zudem auf die Anmeldung mit dem Aktenzeichen DE 10 2016 225 499.5 verwiesen.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine perspektivische Darstellung einer Beladestation.
Figur 2 zeigt eine erste seitliche Darstellung der Beladestation gemäß Figur 1.
Figur 3 zeigt eine erste weitere perspektivische Darstellung der Beladestation gemäß Figur 1.
Figur 4 zeigt eine Beladestation gemäß Figur 1 von vorn.
Figur 5 zeigt eine Beladestation gemäß Figur 1 von hinten.
Figur 6 zeigt eine Beladestation gemäß Figur 1 von oben.
Figur 7 zeigt eine Funktionseinheit der Beladestation in perspektivischer Darstellung.
Figur 8 zeigt eine Funktionseinheit der Beladestation von vorn.
Figur 9 zeigt eine Funktionseinheit der Beladestation in perspektivischer Darstellung.
Figur 10 zeigt eine seitliche Darstellung einer Palettiervorrichtung, umfassend eine Beladestation gemäß Figur 1.
Figur 11 zeigt eine Palettiervorrichtung, umfassend eine Beladestation gemäß Figur 10 von oben.
Figur 12 zeigt eine Transport- und Montageoptimierung der Beladestation gemäß Figur 1.
Figuren 13 bis 21 zeigen schematisch einen ersten Funktionsablauf beim Beladen einer Palette mit Gebindelagen durch eine Beladestation.
Figur 22 zeigt die Anordnung der ersten und zweiten Ladeeinheiten im unbeladenen Zustand.
Figur 23 zeigt die Anordnung der ersten und zweiten Ladeeinheiten im beladenen Zustand der ersten Ladeeinheit.
Figur 24 zeigt eine erste Option der Anordnung des Lagenanschlags beim Überschieben einer palettierfähigen Lage.
Figur 25 zeigt eine zweite Option der Anordnung des Lagenanschlags beim Überschieben einer palettierfähigen Lage.
Figuren 26 bis 34 zeigen schematisch einen weiteren Funktionsablauf beim Beladen einer Palette mit Gebindelagen.
Figuren 35 bis 38 zeigen schematisch eine Ausführungsform eines Antriebs des Lagenanschlags der Beladestation.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

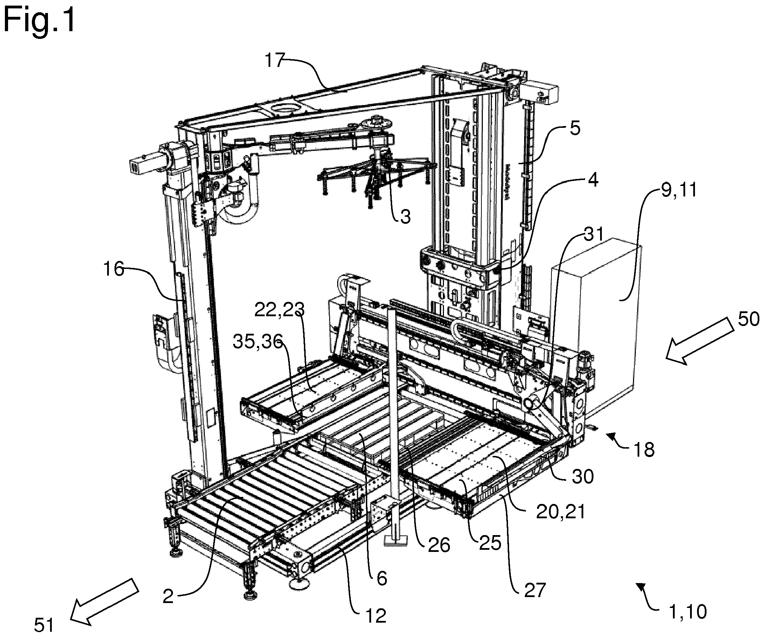

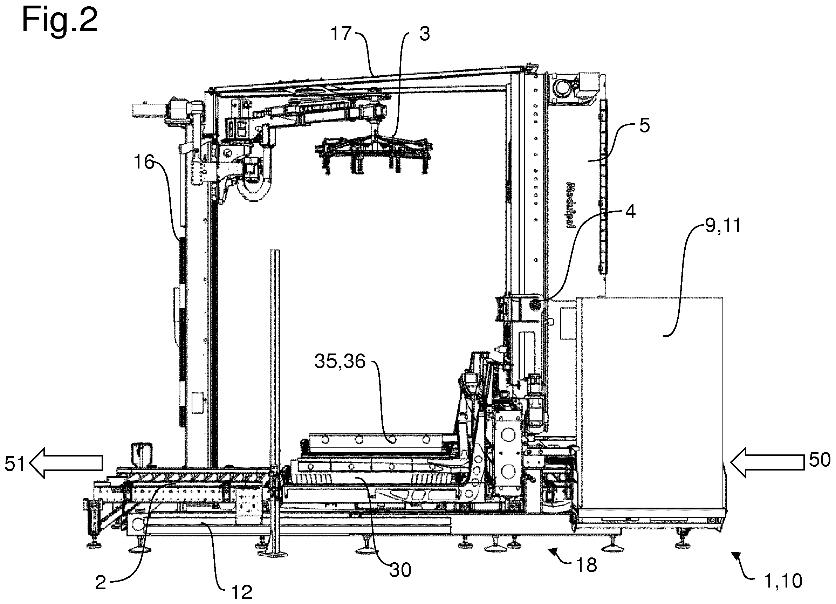

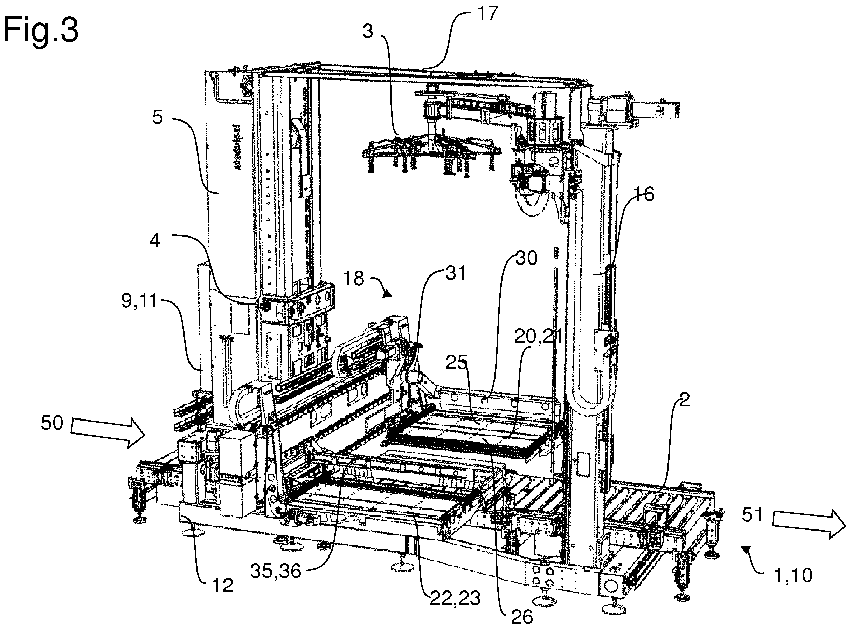

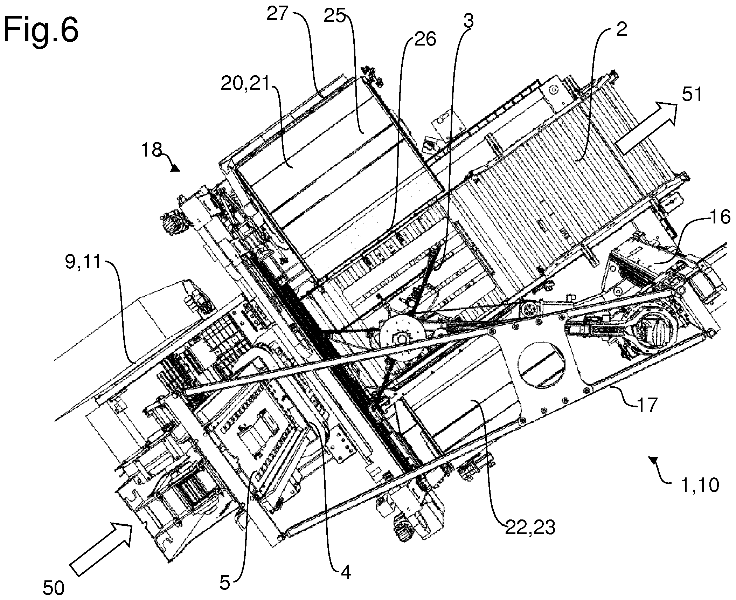

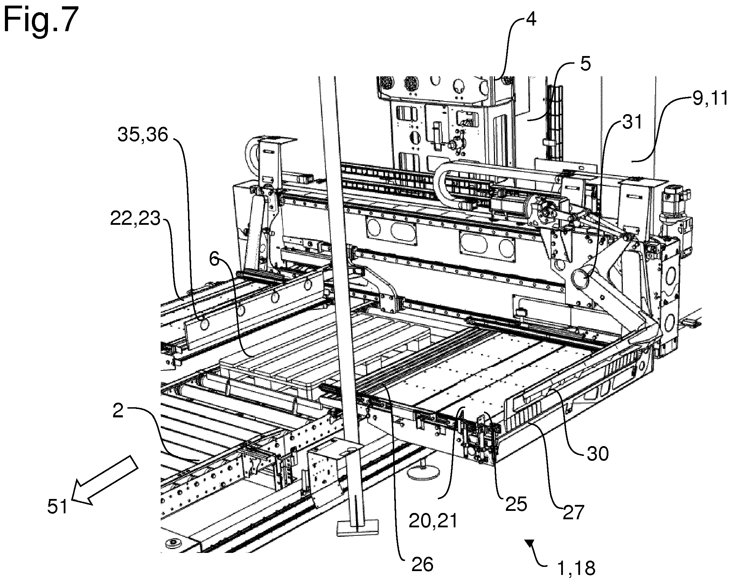

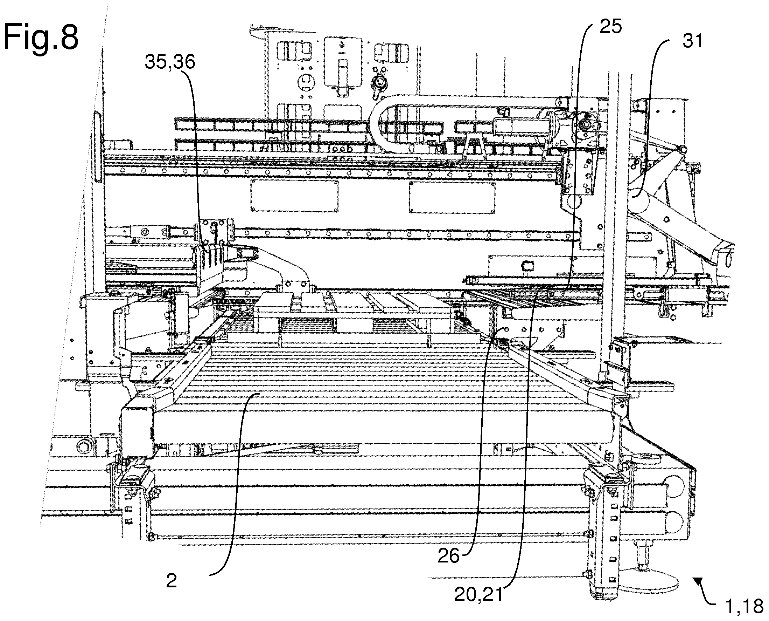

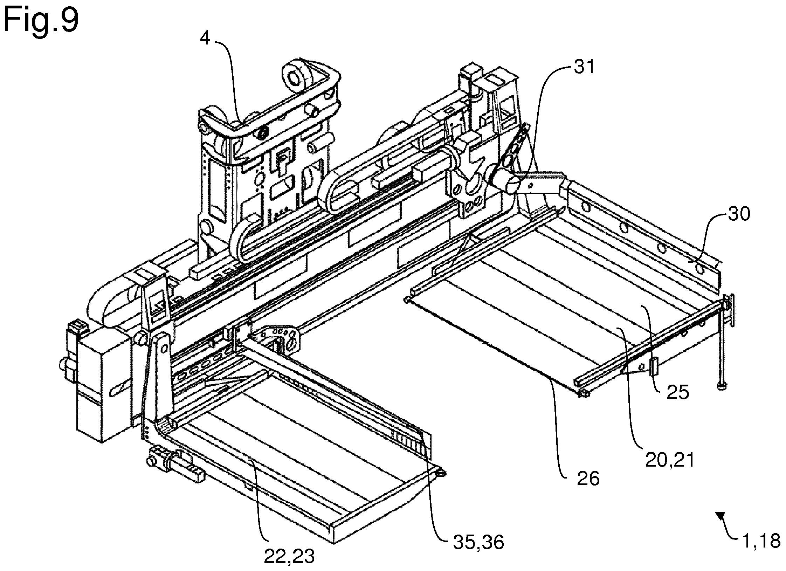

Figuren 1 bis 6 zeigen unterschiedliche Darstellungen einer Beladestation 1 und Figuren 7 bis 9 zeigen jeweils unterschiedliche Darstellungen einer Funktionseinheit 18 der Beladestation 1 im Detail. Die Beladestation 1 ist insbesondere Bestandteil einer Palettiervorrichtung 10, die weiterhin eine Palettenzu- und -abtransporteinrichtung 2 umfasst und beispielsweise zusätzlich mit einem Zwischenlagen-Einleger 3 ausgestattet sein kann.

Der Beladestation 1 ist weiterhin ein Lagenvorbereitungs- und -bereitstellungsmodul (nicht dargestellt) zugeordnet, über welche eine palettierfähige und eine Vielzahl an Stückgütern aufweisende Lage dargeboten werden kann. Die Bereitstellung kann als Bestandteil einer Gruppierstation bzw. als Gruppiertisch ausgebildet sein. Weiter kann die Bereitstellung eine horizontale Aufstandsfläche für eine jeweilige palettierfähige Lage ausbilden.

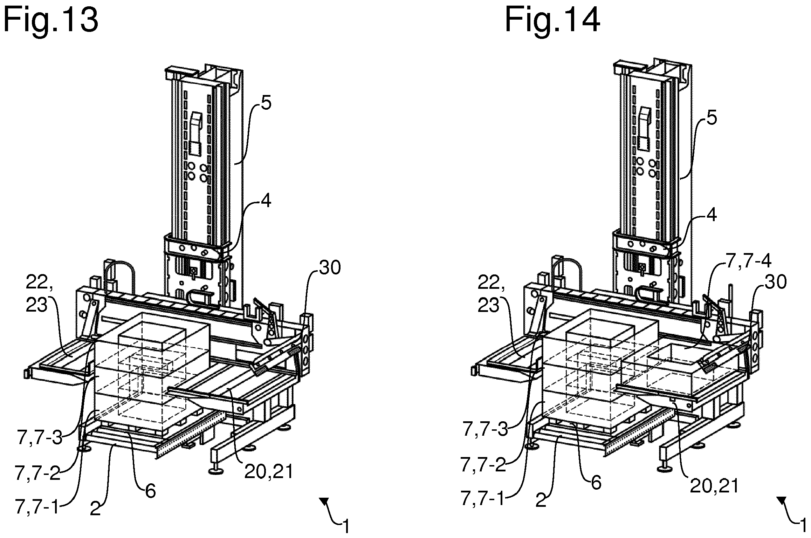

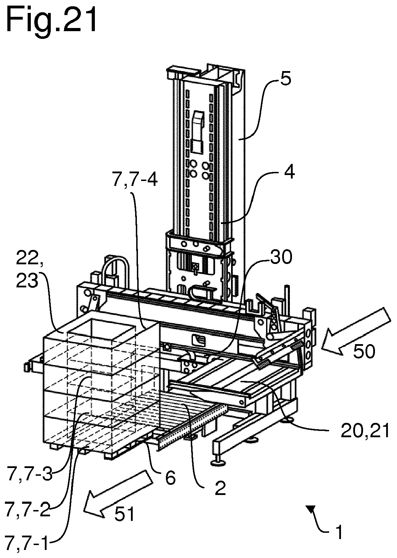

Die Beladestation 1 umfasst eine erste Ladeeinheit 20 und eine zweite Ladeeinheit 22. Die erste Ladeeinheit 20 ist zur Aufnahme einer vollständigen palettierfähigen Lage ausgebildet und wird nachfolgend auch als Ganzschicht-Beladeplatte 21 bezeichnet. Dagegen ist die zweite Ladeeinheit 22 nur zur teilweisen Aufnahme einer vollständigen palettierfähigen Lage ausgebildet. Insbesondere ist vorgesehen, dass die zweite Ladeeinheit 22 jeweils nur eine halbe palettierfähige Lage aufnimmt; die zweite Ladeeinheit 22 wird deshalb nachfolgend auch als Halbschicht-Beladeplatte 23 bezeichnet. Die erste Ladeeinheit 20 kann eine im Wesentlichen horizontale Auflageebene 25 ausbilden, auf welcher eine vollständige palettierfähige Lage aufgenommen werden kann. Weiter ist eine vollständig aufgenommene palettierfähige Lage teilweise von der ersten Ladeeinheit 20 an die zweite Ladeeinheit 22 weiterführbar, so dass die palettierfähige Lage gemeinsam von der ersten Ladeeinheit 20 und der zweiten Ladeeinheit 22 getragen wird. Dies wird insbesondere im Zusammenhang mit den Figuren 13 bis 21 detailliert dargestellt und nachfolgend noch genauer beschrieben.

Die Beladestation 1 umfasst einen an einer Hubsäule 5 angeordneten Hubschlitten 4, an dem die erste und zweite Ladeeinheit 20, 22 höhenverstellbar angeordnet sind. Somit kann die Höhe der ersten und zweiten Ladeeinheit 20, 22 einfach an die Höhe der zu beladenden Palette 6 angepasst werden, da diese mit jeder auf der Palette 6 angeordneten palettierfähigen Lage entsprechend zunimmt. Vorzugsweise ist der Hubschlitten 4 über eine Linearführung an der Hubsäule beweglich angeordnet, wobei insbesondere wartungsfreie Kunststoffrollen oder andere geeignete Linearlagerungen Verwendung finden können.

Die Beladestation 1 umfasst einen Schubbalken 30, der insbesondere dazu dient, die vollständig von der ersten Ladeeinheit 20 aufgenommene palettierfähige Lage teilweise von der ersten Ladeeinheit 20 auf die zweite Ladeeinheit 22 überzuschieben. Der als Schubbalken 30 bezeichnete Schieber ist der ersten Ladeeinheit 20 zugeordnet und kann insbesondere zwischen einer der zweiten Ladeeinheit 22 zugewandten ersten Kante 26 der ersten Ladeeinheit 20 und einer parallel dazu gegenüberliegend angeordneten zweiten Kante 27 der ersten Ladeeinheit 20 in horizontaler Richtung bewegt werden. Weiterhin kann vorgesehen sein, dass der Schubbalken 30 über ein Drehgelenk 31 oder eine Hubeinrichtung o.ä. nach oben verschoben und/oder von der ersten Ladeeinheit 20 weggeschwenkt werden kann. Dies ist insbesondere notwendig, um den Überschub einer weiteren palettierfähigen Lage vom Lagenvorbereitungs- und -bereitstellungsmodul (nicht dargestellt) zu ermöglichen, so dass diese Lage unter dem nach oben gehobenen oder nach oben verschwenkten Schubbalken 30 hindurchtauchen kann.

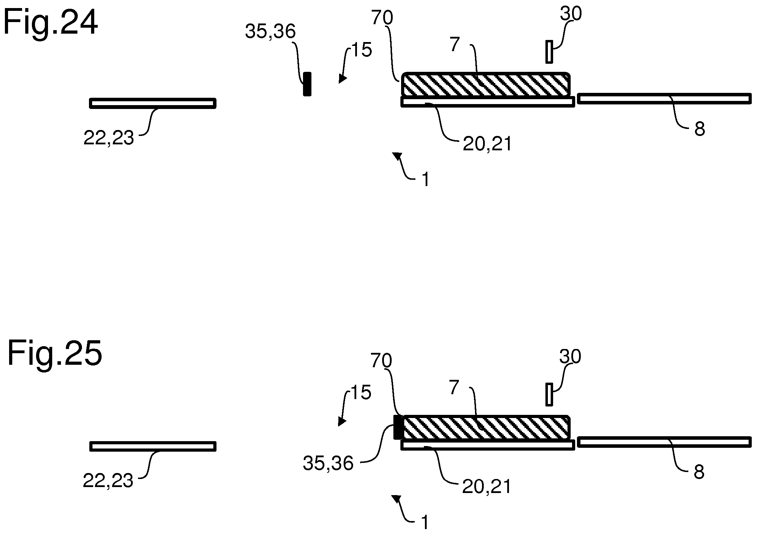

Weiterhin umfasst die Beladestation 1 ein Anschlagelement 35, insbesondere einen sogenannten Lagenanschlag 36, der parallel zum Schubbalken 30 angeordnet ist. In der Regel ist der Schubbalken 30 der ersten Ladeeinheit 20 und der Lagenanschlag 36 der zweiten Ladeeinheit 22 zugeordnet. Der Lagenanschlag 36 kann in Richtung des Schubbalkens 30 oder vom Schubbalken 30 weg bewegt werden. Hierfür ist dem Lagenanschlag 36 ein eigener Antrieb zugeordnet, so dass der Schubbalken 30 und der Lagenanschlag 36 jeweils individuell und unabhängig voneinander bewegt werden können. Im Gegensatz zu Ausführungsformen, bei denen eine gekoppelte entgegengesetzt gerichtete Bewegung von Lagenanschlag 36 und Schubeinheit 30 erfolgt, kann ein individuell steuerbarer Lagenanschlag 36 vorzeitig an der dem Schubbalken 30 gegenüberliegenden Seite einer palettierfähigen Lage angreifen und somit die palettierfähige Lage zumindest teilweise während des Überschubprozesses von der ersten zur zweiten Ladeeinheit 20, 22 unterstützen. Insbesondere schiebt der Schubbalken 30 die zu palettierende Gebindelage 7 in Richtung der zweiten Ladeeinheit 22, während der Lagenanschlag 36 zumindest temporär oder phasenweise an eine Vorderkante 70 (vgl. Figur 24) der Gebindelage 7 angelegt wird und sich zusammen mit der Gebindelage 7, insbesondere dieser vorauseilend, in Richtung zur zweiten Ladeeinheit 22 bewegt. Durch den Lagenanschlag 36 wird beim Überschieben der Gebindelage 7 in Richtung zur zweiten Ladeeinheit 22 die Gebindelage 7 stabilisiert und werden insbesondere einzelne Artikel oder Stückgüter der Gebindelage 7 am Umkippen gehindert. Es kann somit bevorzugt vorgesehen sein, dass der Lagenanschlag 36 und der Schubbalken 30 beim teilweisen Überführen der Gebindelage 7 von der ersten Ladeeinheit 20 zur zweiten Ladeeinheit 20 zumindest phasenweise synchron zueinander in dieselbe Richtung bewegt werden.

Die erste Ladeeinheit 20 und die zweite Ladeeinheit 22 sind mechanisch aneinander gekoppelt sein, so dass die erste Ladeeinheit 20 und die zweite Ladeeinheit 22 in vertikaler Richtung nicht relativ zueinander bewegt werden können. Weiterhin können die erste Ladeeinheit 20 und die zweite Ladeeinheit 22 derart mechanisch aneinander gekoppelt sein, dass sie jeweils eine in einer horizontalen Ebene entgegengesetzt gerichtete Bewegung durchführen können, insbesondere eine Bewegung aufeinander zu oder voneinander weg.

Die Bewegung der ersten und zweiten Ladeeinheit, der Schubbalken 30, der Lagenanschlag 26 und gegebenenfalls weitere Komponenten der Beladestation und/oder der Palettiervorrichtung 10 werden insbesondere über mindestens eine Steuerungseinrichtung 9 kontrolliert und angesteuert. Diese ist vorzugsweise in einem Schaltschrank 11 angeordnet.

Der Hubschlitten 4, die erste Ladeeinheit 20 mit Schubbalken 30 und Antrieb sowie die zweite Ladeeinheit 22 mit Anschlagelement 35 und Antrieb bilden eine sogenannte Funktionseinheit 18.

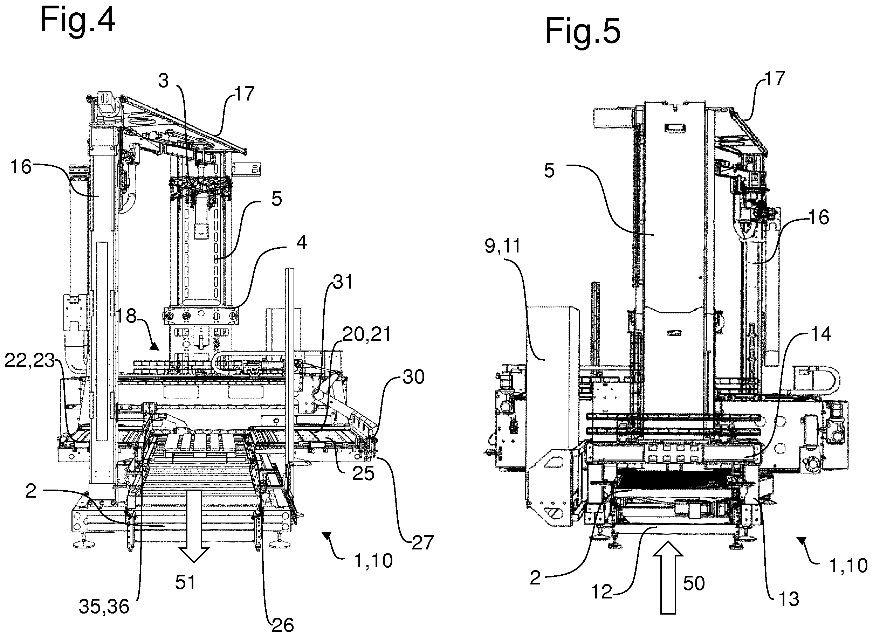

Die Hubsäule 5 mit dem Hubschlitten 4 und den weiteren funktionellen Komponenten der Beladestation 1 ist vorzugsweise an einem Bodenrahmen 12 angeordnet und befestigt, der der Beladestation 1 die notwendige Standfestigkeit verleiht. Beispielsweise ist vorgesehen, dass die Palettenzu- und -abtransporteinrichtung 2 oberhalb des Bodenrahmens verlaufend angeordnet ist, wodurch ein Kippen der Beladestation 1 zusätzlich verhindert wird. Die Hubsäule 5 ist über vertikale und horizontale Abstandsrahmenelemente 13, 14 derart an dem Bodenrahmen 12 angeordnet, dass die Palettenzu- und -abtransporteinrichtung 2 sich unterhalb der Hubsäule 5 hindurch erstreckend angeordnet werden kann (Figur 5). Weiterhin sind als Gegengewicht zur Hubsäule 5 und Stabilisierung der Beladestation 1 ein abstützendes Rahmenelement 16 und eine Querverbindung 17 vorgesehen. An dem abstützenden Rahmenelement 16 und/oder der Querverbindung 17 kann beispielsweise der Zwischenlagen- Einleger 3 angeordnet sein.

Die beschriebene und in zwei Ladeeinheiten 20, 22 unterteilte Beladeplatte der Beladestation 1 ermöglicht Leistungen von bis zu 450 palettierten Lagen pro Stunde. Aufgrund der zweigeteilten Beladeplatte ist zudem die Palettierung von Lagenschemata mit Lücken zwischen den Stückgütern möglich.

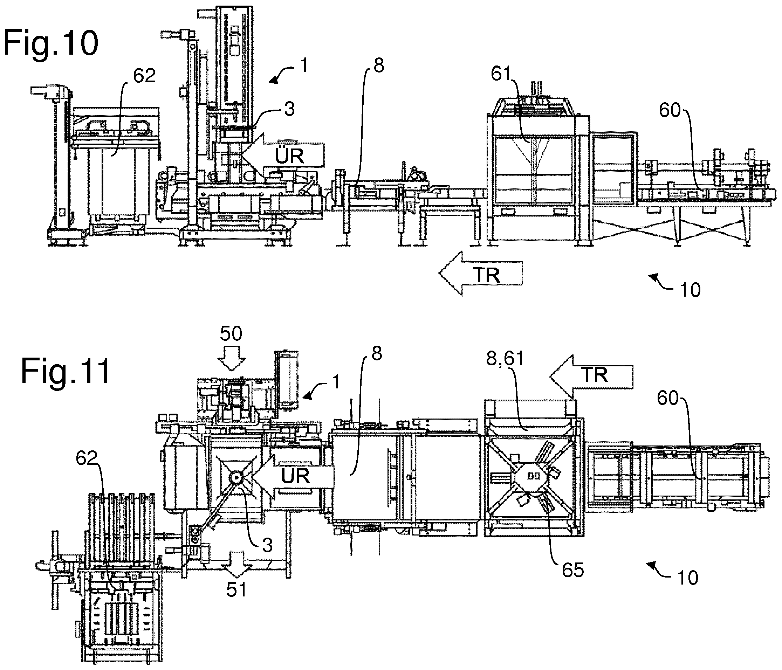

Figur 10 zeigt eine seitliche Darstellung einer Palettiervorrichtung 10, umfassend eine Beladestation 1 gemäß Figur 1, und die Figur 11 zeigt eine entsprechende Ansicht einer Palettiervorrichtung 10 von oben. Zuerst werden Stückgüter zu einer zu palettierenden Lage zusammengestellt. Beispielsweise werden Gebinde, umfassend eine Mehrzahl von Getränkebehältern, die durch eine Umverpackung in Form einer Schrumpffolie oder eine Umreifung o.ä. zusammen gehalten werden, über eine Zuführeinrichtung 60, beispielsweise einer geeigneten Fördervorrichtung, in Transportrichtung TR einem Lagenvorbereitungs- und -bereitstellungsmodul 8 zugeführt. Das Lagenvorbereitungs- und -bereitstellungsmodul 8 wird beispielsweise durch ein Gruppiermodul 61 gebildet, in dem die Stückgüter durch geeignete Manipulatoren 65 o.ä. gemäß einem gewünschten und/oder vorgegebenen Lagenschema als palettierfähige Lage zusammengestellt werden. Das Lagenvorbereitungs- und -bereitstellungsmodul 8 kann beispielsweise durch eine Vorrichtung zum Umgang mit in mindestens einer Reihe hintereinander bewegten Stückgütern gebildet sein, wie sie in den Patentanmeldungen mit den Aktenzeichen DE 10 2016 206 639.0 und DE 10 2016 213 400.0 beschrieben ist. Eine solche Vorrichtung kann in einer Reihe lückenlos zugeführte Stückgüter, beispielsweise lückenlos zugeführte Gebinde jeweils umfassend eine Mehrzahl von durch eine Umverpackung zusammengefassten Artikeln, bearbeiten.

Die Zuführung der Stückgüter zu einem Manipulator der Vorrichtung erfolgt beispielsweise über eine Transporteinrichtung bzw. Zuführeinrichtung 60 mit wenigstens zwei sich in einer Transportrichtung aneinander anschließende Transportabschnitte, wobei der erste Transportabschnitt beispielsweise durch eine Röllchenbandkette gebildet wird und der zweite Transportabschnitt aus einem Förderband mit einer haftenden Oberfläche, beispielsweise einem gummierten Förderband, gebildet wird. Eine solche Transporteinrichtung wird in der Patentanmeldung mit dem Aktenzeichen DE 10 2017 207 353.5 beschrieben.

Der mindestens eine Manipulator der Vorrichtung bildet innerhalb der Vorrichtung den Takt der jeweils zu bearbeitenden Stückgüter, indem er die entsprechende Anzahl an Stückgütern aus der Reihe der lückenlos einlaufenden Stückgüter abgreift. Der Manipulator wird beispielsweise durch einen Delta- Kinematik- Roboter gebildet, der zum Greifen, Freigeben und Drehen von Produkten eine erste Welle und eine zweite Welle aufweist. Insbesondere kann der Manipulator an eine Linearführung drehfest angeflanscht sein, wobei die Linearführung als erste Welle ausgebildet ist, so dass der Manipulator über die erste Welle / die Linearführung gedreht werden kann. Die zweite Welle bildet eine Betätigungseinrichtung, mittels welcher Klemmbacken des Manipulators zum Schließen und Öffnen angesteuert werden können. Die Drehachsen der ersten Welle sowie der zweiten Welle sind identisch, zudem sind sie beiden Wellen koaxial zueinander orientiert bzw. angeordnet. Die erste Welle kann vorzugsweise durch ein Hohlrohr gebildet sein, und die zweite Welle ist in dem Hohlraum der ersten Welle angeordnet.

Die palettierfähige Lage wird in Überschubrichtung ÜR auf die erste Ladeeinheit 20 der in den Figuren 1 bis 9 vorbeschriebenen Beladestation 1 übergeschoben und gemäß dem nachfolgend detailliert beschriebenen Verfahren auf eine Palette bzw. auf mindestens eine Oberseite einer auf einer Palette angeordneten weiteren palettierfähigen Lage angeordnet. Die hierzu notwendige Palette (nicht dargestellt) wird in Palettenzuführungsrichtung 50 in die Beladestation 1 eingeführt und in Palettenabtransportrichtung 51 aus der Beladestation 1 entfernt. Die Palettenzuführungsrichtung 50 und die Palettenabtransportrichtung 51 sind vorzugsweise geradlinig in einer Flucht und quer zur Überschubrichtung ÜR der palettierfähigen Lage innerhalb der Beladestation 1 ausgebildet.

Weiterhin umfasst die Palettiervorrichtung 10 vorzugsweise einen sog. Zwischenlagen-Vorseparierer 62 inklusive Magazin für die Zwischenlagen und Zentriereinheit zum zentrierten Ausrichten der Zwischenlage zu der jeweiligen palettierfähigen Lage. Wie bereits im Zusammenhang mit den Figuren 1 bis 9 beschrieben, ist der Beladestation 1 zudem ein Zwischenlagen-Einleger 3 zugeordnet, um zwischen den aufeinander zu stapelnden palettierfähigen Lagen jeweils eine Zwischenlage, beispielsweise aus einem Kartonzuschnitt o.ä., zum Schutz der jeweiligen unteren palettierfähigen Lage anzuordnen. Wahlweise können auch zunächst zwei Lagen aufeinandergestapelt werden, bevor eine darauf abzulegende dritte Lage mit einer solchen Zwischenlage von der Oberseite der zweiten Lage getrennt wird. In diesem Fall werden bspw. paarweise Lagenstapel gebildet, die jeweils in Paaren aufeinander folgender Lagen durch Zwischenlagen voneinander getrennt werden. Auch andere Trennungssystematiken mittels solcher Zwischenlagen sind denkbar, sind hier jedoch nicht näher erläutert.

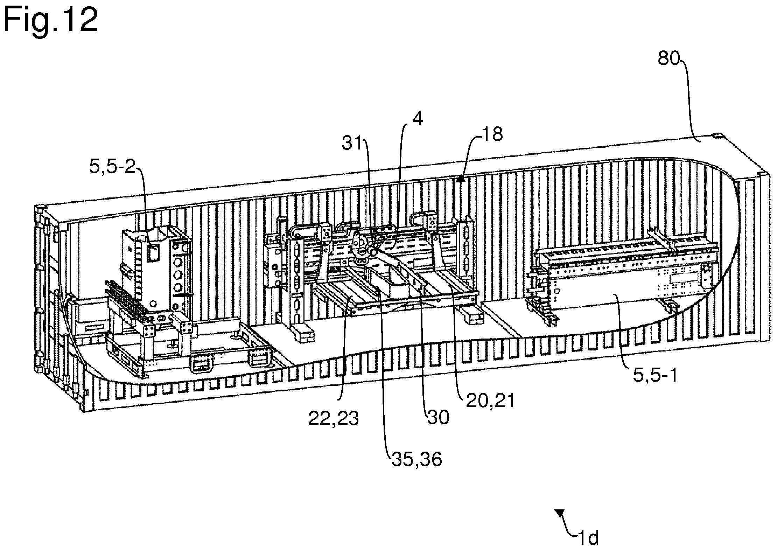

Figur 12 zeigt eine Transport- und Montageoptimierung der Beladestation 1 gemäß Figur 1. Die Hubsäule 5 ist insbesondere zweiteilig ausgeführt und besteht aus einem oberen Teil 5-1 und einem unteren Teil 5-2. Durch die Ausführung der Hubsäule 5 in zweiteiliger Form ist ein besonders platzschonender Transport einer demontierten Beladestation 1d in einem Container 80 o.ä. möglich, da der obere Teil 5-1 der Hubsäule 5 separat liegend innerhalb des Containers 80 angeordnet und transportiert werden kann. Durch die zweiteilige Ausführung kann zudem die Funktionseinheit 18, umfassend den Hubschlitten 4, die erste Ladeeinheit 20 mit Schubbalken 30 und die zweite Ladeeinheit mit Anschlagelement 35 einfach von der Hubsäule 5 abgenommen werden, ohne dass nach oben hin ein großer Arbeitsraum notwendig ist. Stattdessen wird die Funktionseinheit 18 für die Demontage der Beladestation 1 in der niedrigsten Höhe angeordnet, die sich unterhalb der Trennstelle von oberem und unterem Teil 5-1, 5-2 der Hubsäule 5 befindet. Zuerst wird der obere Teil 5-1 abgenommen und anschließend kann die Funktionseinheit 18 vom unteren Teil 5-2 durch eine Vertikalbewegung nach oben abgenommen werden.

Das im Zusammenhang mit den Figuren 1 bis 9 beschriebe Bodenrahmenkonzept und die geteilte Hubsäule 5 ermöglichen eine einfache, kostengünstige Installation der modular aufgebauten Beladestation 1. Das modulare System kann bedarfsgerecht auf die jeweiligen Anforderungen abgestimmt werden. Da die Beladestation 1 einen unteren Palettenzulauf über eine unterhalb der Hubsäule 5 angeordnete Palettenzu- und -abtransporteinrichtung 2 aufweist, sind keine Hebebühnen zum Anheben der zu beladenden Palette auf ein bestimmtes Beladeniveau notwendig.

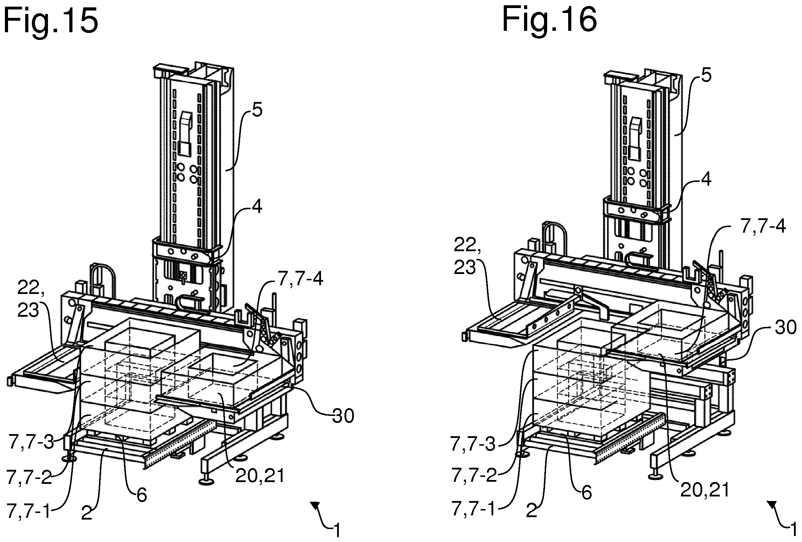

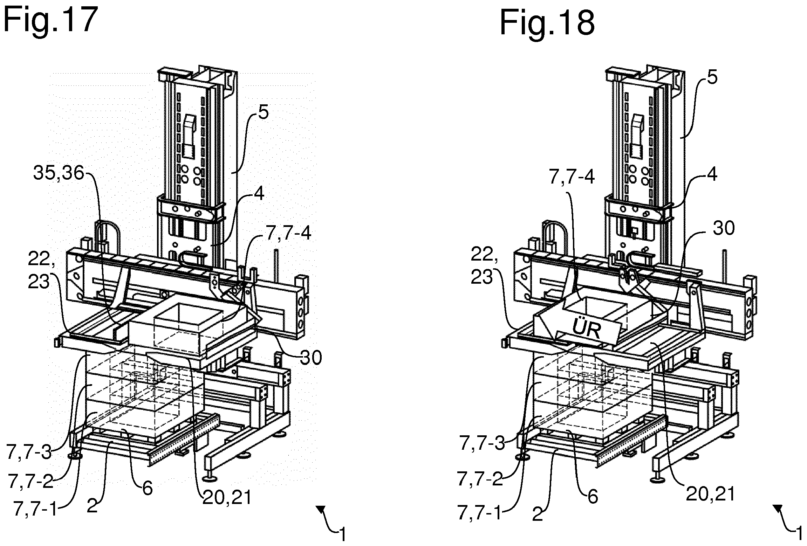

Figuren 13 bis 21 zeigen schematisch einen ersten Funktionsablauf beim Beladen einer Palette 6 mit Gebindelagen 7 durch eine Beladestation 1. Wie in Figur 13 deutlich zu erkennen ist, befinden sich bereits drei Gebindelagen 7-1, 7-2, 7-3 auf der zu beladenden Palette 6. Die mechanisch mit dem Hubschlitten 4 und miteinander verbundenen ersten und zweiten Ladeeinheiten 20, 22 werden durch eine vertikale Bewegung des Hubschlittens 4 an der Hubsäule 5 auf die Höhe des (nicht dargestellten) Lagenvorbereitungs- und -bereitstellungsmodul gebracht (Figur 13) und eine entsprechend vorbereitete Gebindelage 7-4 wird auf der ersten Ladeeinheit 20 bzw. Ganzschicht-Beladeplatte 21 übergeschoben. Vorzugsweise ist vorgesehen, dass der Lagenschieber 36 und der Schubbalken 30 ebenfalls an dem Hubschlitten 4 aufgehängt und gelagert sind und somit gemeinsam mit der ersten und zweiten Ladeeinheit vertikalbeweglich an der Hubsäule 5 angeordnet sind. Zum Überschieben der Gebindelage 7 auf die erste Ladeeinheit 20 bzw. Ganzschicht-Beladeplatte 21 befindet sich der Schubbalken 30 in einer nach oben weggeschwenkten, offenen Position (Figur 14). Anschließend wird der Schubbalken 30 nach unten verschwenkt und legt sich an die hintere Kante der Gebindelage 7-4 an (Figur 15). Die erste Ladeeinheit 20 mit der Gebindelage 7 und die zweite Ladeeinheit 22 werden über den Hubschlitten 4 in eine Abgabehöhe unmittelbar oberhalb der zuoberst auf der Palette 6 angeordneten Gebindelage 7-3 angehoben (Figur 16). Die erste Ladeeinheit 20 bzw. Ganzschicht-Beladeplatte 21 und die zweite Ladeeinheit 22 bzw. Halbschicht- Beladeplatte 23 werden synchron zusammengeführt, d.h. sie fahren synchron zur Mitte der Abgabeposition (Figur 17). Zusätzlich wird der Lagenanschlag 36 in etwa in der Mitte der Abgabeposition angeordnet.

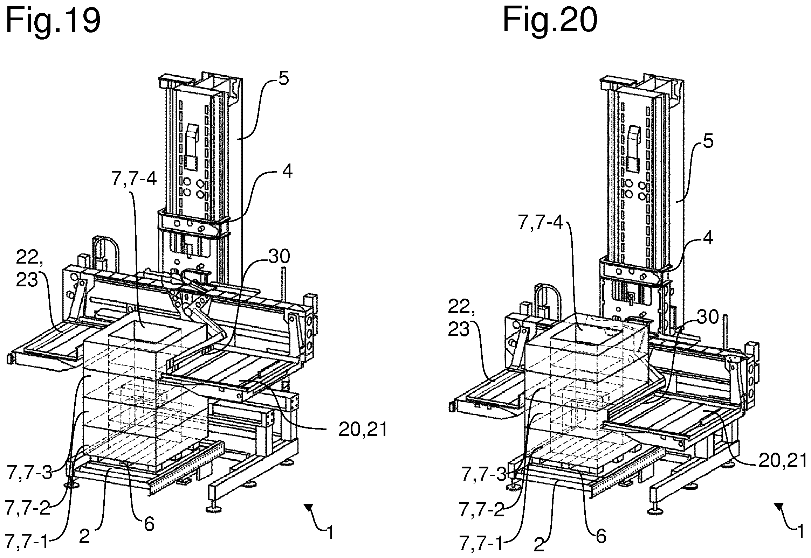

Sobald die erste und die zweite Ladeeinheit 20, 22 zusammengeführt sind und eine gemeinsame Auflagefläche bilden, wird der Schubbalken 30 in Richtung der zweiten Ladeeinheit 22 bewegt und schiebt dabei die Gebindelage 7-4 teilweise auf die zweite Ladeeinheit 22 über. Dabei stößt die Gebindelage 7-4 an den Lagenanschlag 36 an, der anschließend ebenfalls in derselben Überschubrichtung ÜR wie die Gebindelage 7-4 und der Schubbalken 30 bewegt wird und dadurch ein Auseinanderlaufen der Gebindelage 7-4 verhindert (Figur 18). Vorzugsweise wird die Gebindelage 7-4 zur Hälfte auf die zweite Ladeeinheit 22 übergeschoben, so dass die andere Hälfte auf der ersten Ladeeinheit 20 verbleibt. Die Gebindelage 7-4 wird nunmehr von beiden Ladeeinheiten 20, 22 gemeinsam getragen. Nachdem die Gebindelage 7-4 in der Abgabeposition gemäß Figur 18 angeordnet ist, öffnen sich die erste und zweite Ladeeinheit 20, 22, in dem sie synchron horizontal auseinander bewegt werden. Die Ladeeinheiten 20, 22 werden zumindest so lange auseinander bewegt, bis ein minimaler Abstand ausgebildet ist, der zumindest einer Breite der Gebindelage 7-4 in Überschubrichtung entspricht. Das Auseinanderbewegen der ersten und zweiten Ladeeinheit 20, 22 dient dem Absetzen der Gebindelage 7-4 auf der obersten, auf der Paltette 6 angeordneten Gebindelage 7-3. Dabei verbleiben der Schubbalken 30 und der Lagenanschlag 36 in ihrer Position und stabilisieren die Gebindelage 7-4 somit weiterhin (Figur 19).

Anschließend werden die erste und zweite Ladeeinheit 20, 22 wiederum auf die Höhe des (nicht dargestellten) Lagenvorbereitungs- und -bereitstellungsmodul gebracht (Figur 20) und die mit vier Gebindelagen 7-1, 7-2, 7-3, 7-4 voll beladene Palette 6 kann über die Palettenzu- und -abtransporteinrichtung 2 nunmehr in Palettenabtransportrichtung 51 aus der Beladestation 1 ausfahren. Zeitgleich kann eine neue Palette über die Palettenzu- und -abtransporteinrichtung 2 in Palettenzutransportrichtung 50 zugeführt werden und eine neue Gebindelage 7 bei offenem Schubbalken 30 auf die erste Ladeeinheit 20 übergeschoben werden. Alternativ könnte eine weitere Gebindelage 7 entsprechend der oben beschriebenen Verfahrensschritte auf der nunmehr oberen Gebindelage 7-4 angeordnet werden.

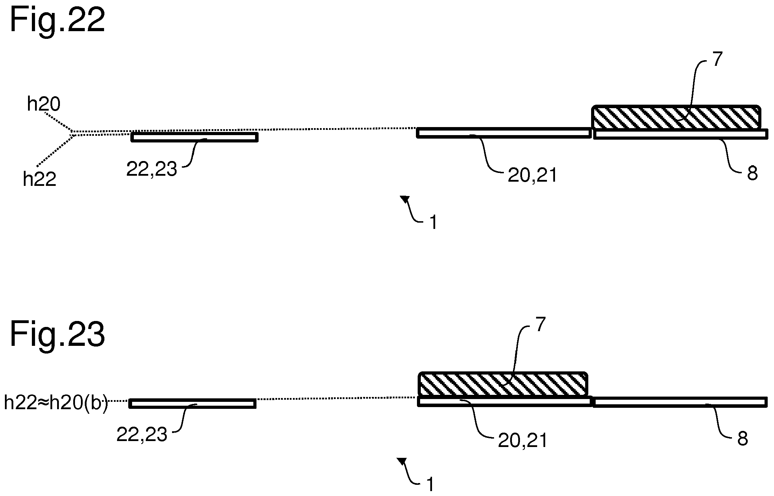

Figur 22 zeigt die Anordnung der ersten und zweiten Ladeeinheiten 20, 22 einer Beladestation 1 im unbeladenen Zustand, und Figur 23 zeigt die Anordnung in einem Arbeitszustand, in dem die erste Ladeeinheit 20 mit einer Gebindelage 7 beladen ist. In den Figuren 22 und 23 ist zudem schematisch ein Lagenvorbereitungs- und -bereitstellungsmodul 8 zu erkennen, das eine entsprechende Gebindelage 7 bereitstellt, die zur Anordnung auf einer Palette (nicht dargestellt) zuerst auf die erste Ladeeinheit 20 übergeschoben wird (Figur 23). Da eine solche Gebindelage 7 ein gewisses Gewicht auf die einseitig am Hubschlitten 4 angeordnete erste Ladeeinheit 20 aufbringt, kommt es beim Überschieben der Gebindelage 7 unter Umständen zu einem leichten Absenken oder Absacken der Auflageebene 25. Aus diesem Grund ist vorgesehen, dass die erste Ladeeinheit 20 im unbeladenen Zustand in einer Normalhöhe h20 relativ zum Hubschlitten 4 (vergleiche Figuren 1 bis 22) angeordnet ist, die zumindest geringfügig oberhalb einer Höhe h22 ausgebildet ist, wobei die Höhe h22 einer Normalhöhe der zweiten Ladeeinheit 22 relativ zum Hubschlitten 4 entspricht. Insbesondere sind die Normalhöhe h20 und h22 derart gewählt, dass die erste Ladeeinheit 20 im mit einer Gebindelage 7 beladenen Zustand in eine Beladehöhe h20(b) absinkt, die sich nicht unterhalb der Normalhöhe h22 der zweiten Ladeeinheit 22 befindet. Insbesondere ist vorgesehen, dass sich im beladenen Zustand die Beladehöhe h20(b) und die Normalhöhen h22 im Wesentlichen auf demselben Höhenniveau befinden. Durch die zumindest geringfügig höhere Anordnung der unbeladenen ersten Ladeeinheit 20 gegenüber der zweiten Ladeeinheit 22 kann ein sicherer, zumindest teilweiser Überschub der Gebindelage 7 von der ersten Ladeeinheit 20 zur zweiten Ladeeinheit 22 gewährleistet werden.

Figur 24 zeigt eine erste Option der Anordnung des Lagenanschlags 36 beim Überschieben einer palettierfähigen Lage 7 von der ersten zur zweiten Ladeeinheit 20, 22 einer Beladestation 1; Figur 25 zeigt eine zweite Option. Bei der ersten Option gemäß Figur 24 wird der Lagenanschlag 36 bei geöffneter Stellung von erster und zweiter Ladeeinheit 20, 22 analog zu Figur 16 in etwa bis zur Mitte der zwischen der ersten und zweiten Ladeeinheit 20, 22 gebildeten Öffnung 15 bewegt. Anschließend werden die erste und zweite Ladeeinheit 20, 22 synchron aufeinander zu bewegt. Sobald der Lagenanschlag 36 die Vorderkante 70 der Gebindelage 7 kontaktiert, wird der Lagenanschlag 36 nunmehr synchron mit der ersten Ladeeinheit 20 und somit gegenläufig zur zweiten Ladeeinheit 22 bewegt. D.h., der Lagenanschlag 36 eilt nunmehr der Vorderkante 70 der Gebindelage 7 voraus und unterstützt die Gebindelage somit, auch nachdem die Öffnung 15 zwischen der ersten und zweiten Ladeeinheit 20, 22 verschlossen ist und die Gebindelage 7 vermittels des Schubbalkens 30 von der ersten Ladeeinheit 20 teilweise auf die zweite Ladeeinheit 22 übergeschoben wird.

Bei der zweiten Option gemäß Figur 25 wird der Lagenanschlag 36 bei geöffneter Stellung von erster und zweiter Ladeeinheit 20, 22 analog zu Figur 16 bis zur ersten Ladeeinheit 20 bewegt und an die Vorderkante 70 der Gebindelage 7 angelegt. In diesem Fall unterstützt der Lagenanschlag 36 die Gebindelage 7 während die erste und die zweite Ladeeinheit 20, 22 synchron aufeinander zubewegt werden und während anschließend die Gebindelage 7 vermittels des Schubbalkens 30 von der ersten auf die zweite Ladeeinheit 20, 22 teilweise übergeschoben wird.

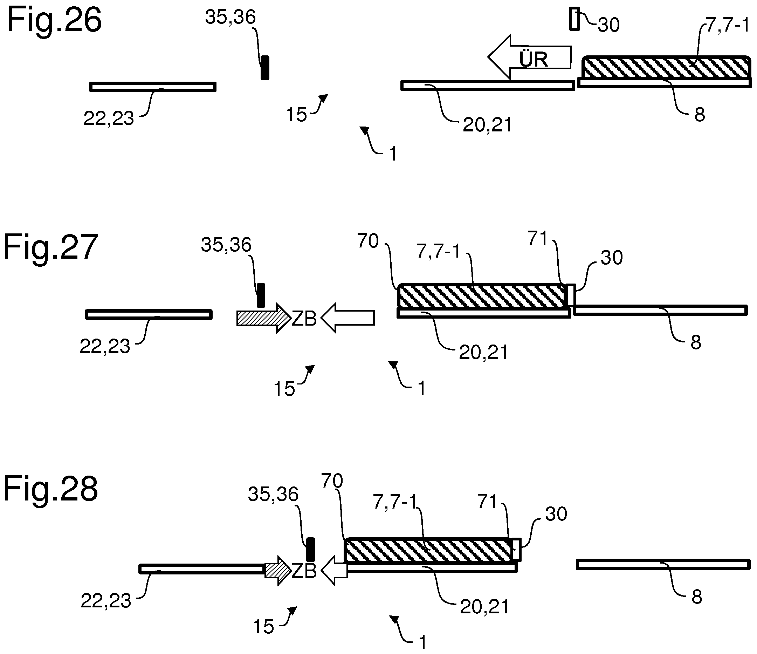

Figuren 26 bis 34 zeigen schematisch einen weiteren Funktionsablauf beim Beladen einer Palette 6 mit Gebindelagen 7, 7-1, 7-2. Durch ein Lagenvorbereitungs- und -bereitstellungsmodul 8 wird eine erste palettierfähige Lage bzw. Gebindelage 7, 7-1 bereitgestellt (Figur 26). Die Gebindelage 7, 7-1 wird durch eine Mehrzahl von Stückgütern gebildet, die in einem definierten Muster und innerhalb eines definierten Raumes angeordnet sind. Die Stückgüter können beispielsweise durch einzelne Artikel, beispielsweise Getränke- oder Lebensmittelbehälter, beispielsweise Flaschen, Dosen, Kanister o.ä. gebildet sein. Die Stückgüter können aber beispielsweise durch Artikelgruppen gebildet sein, die durch eine Umverpackung in Form einer Schrumpffolie, einer Umreifung etc. zu einem Gebinde zusammengefasst sind.

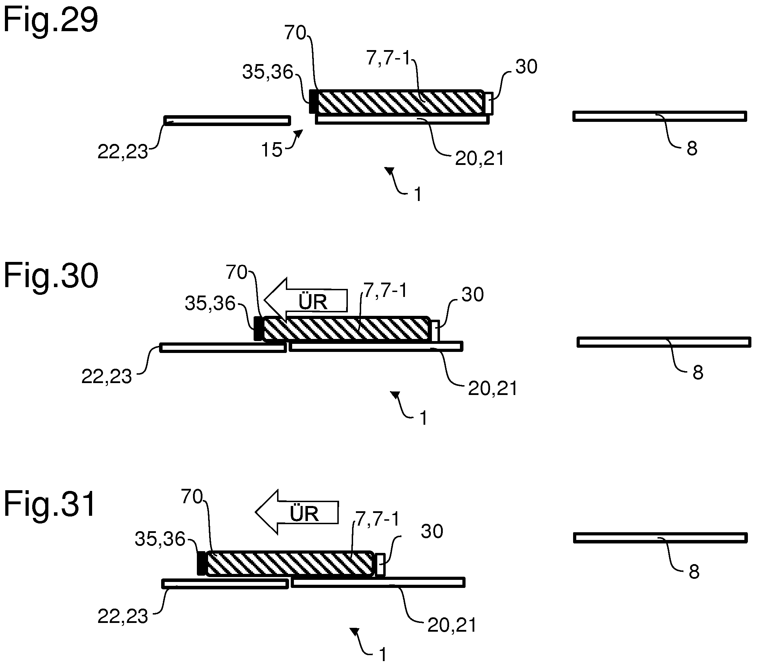

Gemäß Figur 26 ist der der ersten Ladeeinheit 20 zugeordnete Schubbalken 30 derart oberhalb der Ganzschicht- Beladeplatte 21 angeordnet, dass die bereitgestellte palettierfähige Lage 7-1 in Überschubrichtung ÜR an eine erste Ladeeinheit 20 überführt werden kann, die die palettierfähige Lage 7-1 vollständig aufnimmt (Figur 27). Der Schubbalken 30 wird nunmehr an eine Hinterkante 71 der palettierfähigen Lage 7-1 anliegend angeordnet. Nunmehr wird die erste Ladeeinheit mitsamt der darauf aufgenommenen in Richtung der zweiten Ladeeinheit 22 bewegt (Figuren 28, 29), insbesondere in Überschubrichtung ÜR; und die palettierfähigen Lage 7-1 wird unterstützt durch eine Bewegung des Schubbalkens 30 in Überschubrichtung ÜR in etwa hälftig auf die zweite Ladeeinheit 22 übergeschoben (Figuren 30, 31). Insbesondere erfolgt eine Zustellbewegung ZB, bei der die erste und die zweite Ladeeinheit 20, 22 synchron aufeinander zubewegt werden.

Der der zweiten Ladeeinheit zugeordneten Lagenanschlag 36 befindet sich gemäß Figur 26 bei geöffneter Stellung von erster und zweiter Ladeeinheit 20, 22 in etwa mittig zur Öffnung 15 zwischen der der ersten und der zweiten Ladeeinheit 20, 22. Sobald der Lagenanschlag 36 die Vorderkante 70 der Gebindelage 7 kontaktiert (Figur 29), wird der Lagenanschlag 36 nunmehr synchron mit der ersten Ladeeinheit 20 und somit gegenläufig zur zweiten Ladeeinheit 22 bewegt. D.h., der Lagenanschlag 36 eilt nunmehr der Vorderkante 70 der Gebindelage 7-4 voraus und unterstützt diese, auch nachdem die Öffnung 15 zwischen der ersten und zweiten Ladeeinheit 20, 22 verschlossen ist und die Gebindelage 7-4 vermittels des Schubbalkens 30 von der ersten Ladeeinheit 20 teilweise auf die zweite Ladeeinheit 22 übergeschoben wird (Figur 31). Wie insbesondere in Figur 31 zu erkennen ist, liegt die Gebindelage 7-1 nunmehr jeweils hälftig auf der ersten und der zweiten Ladeeinheit 20, 22 auf, wobei die Vorderkante 70 auf der zweiten Ladeeinheit 22 aufliegt und durch den Lagenanschlag 36 gestützt wird und wobei die Hinterkante 71 auf der ersten Ladeeinheit 20 aufliegt und durch den Schubbalken 30 gestützt wird. Gleichzeitig werden die erste und zweite Ladeeinheit 20, 22 auf eine Höhe direkt oberhalb der Palette 6 abgesenkt oder angehoben (Figur 31).

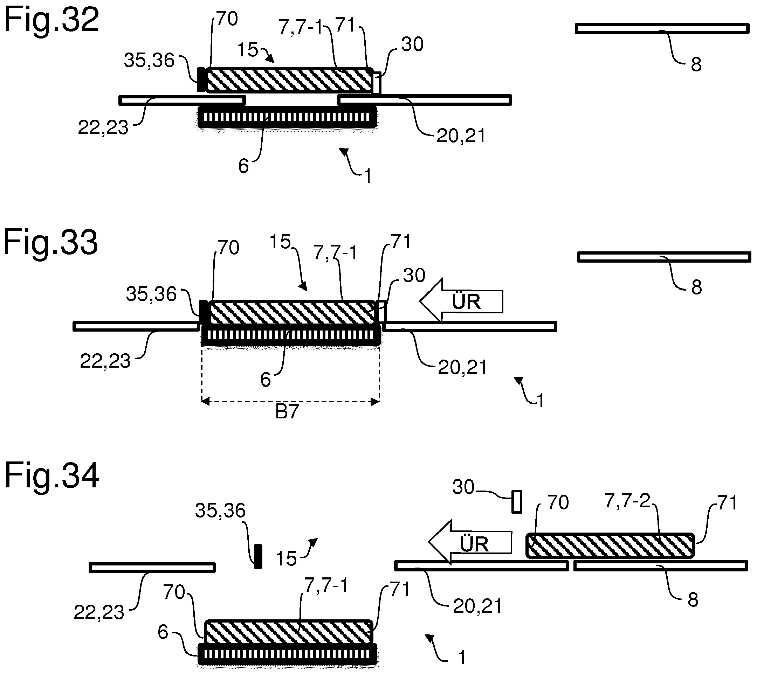

Zum Absetzen der vollständigen palettierfähigen Lage 7-4 auf einer Ablage- und/oder Stapelfläche, insbesondere einer Palette 6 oder einer Oberseite einer zuvor dort abgelegten und bereits palettierten Lage (nicht dargestellt, vergleiche Figuren 13 bis 21), werden die direkt oberhalb der Palette 6 angeordnete erste Ladeeinheit 20 und die zweite Ladeeinheit 22 voneinander distanziert (Figur 32), bis ein Abstand zwischen den beiden Ladeeinheiten 20, 22 zumindest einer Breite B7 der palettierfähigen Lage 7-4 in Überschubrichtung ÜR entspricht (Figur 33). Während des Auseinanderbewegens der ersten Ladeeinheit 20 und der zweiten Ladeeinheit 22 wird die palettierfähige Lage 7-4 durch den beweglichen Lagenanschlag 36 und den beweglichen Schubbalken 30 gestützt und/oder stabilisiert. Dabei werden der Lagenanschlag 36 und der Schubbalken 30 zumindest phasenweise nichtsynchron und/oder unabhängig voneinander bewegt, insbesondere in Bewegungsrichtungen parallel zur Überschubrichtung ÜR.

Anschließend wird die erste Ladeeinheit 20 entgegen der Überschubrichtung ÜR in Richtung des Lagenvorbereitungs- und -bereitstellungsmoduls 8 bewegt, und gleichzeitig werden die erste und die zweite Ladeeinheit 20, 22 wieder auf das Höhenniveau des Lagenvorbereitungs- und -bereitstellungsmoduls 8 gebracht, damit eine weitere durch das Lagenvorbereitungs- und -bereitstellungsmodul 8 vorbereitete palettierfähige Lage 7-2 in analoger Verfahrensweise auf der ersten, auf der Palette 6 angeordneten palettierfähige Lage 7-2 angeordnet werden kann (Figur 33).

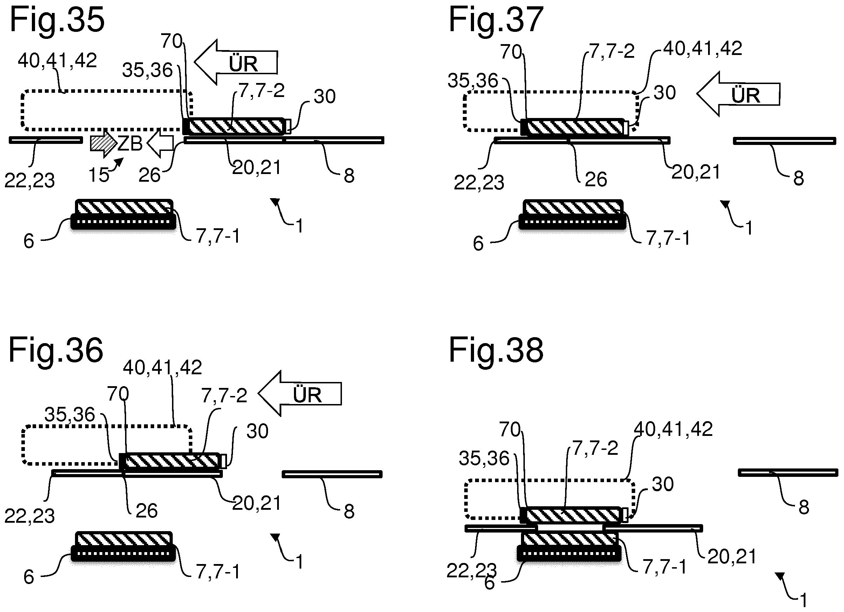

Figuren 35 bis 38 zeigen schematisch eine Ausführungsform eines Antriebs 40 des Lagenanschlags 36 der Beladestation 1. Insbesondere ist der Lagenanschlag 36 an einer angetriebenen umlaufenden Kette 41 oder Riemen befestigt, so dass die Bewegungsbahn des Lagenanschlags 36 an die Umlaufbahn 42 der umlaufenden Kette 41 gekoppelt ist. Der Antrieb 40 ist mechanisch mit den Ladeeinheiten 20, 22 gekoppelt, so dass die Ladeeinheiten 20, 22 und der Antrieb 40 des Lagenanschlags 36 gemeinsam vertikalbeweglich gegenüber der bereitgestellten Palette 6 und/oder gegenüber des Lagenvorbereitungs- und -bereitstellungsmoduls 8 ausgebildet sind.

Die Umlaufbahn 42 ist im dargestellten Ausführungsbeispiel derart gewählt, dass in einer Arbeitsposition gemäß Figur 35 der Lagenanschlag 36 an der ersten, die Öffnung 15 zwischen der ersten und der zweiten Ladeeinheit 20, 22 begrenzende Kante 26 der ersten Ladeeinheit 20 angeordnet werden kann. Somit unterstützt der Lagenanschlag 36 die Vorderkante 70 der Gebindelage 7-2 bei der die Öffnung 15 verkleinernden Zustellbewegung ZB der ersten und zweite Lageeinheit 20, 22 aufeinander zu (Figuren 35, 36, vgl. auch Figuren 27, 28). Insbesondere wird bei der Zustellbewegung ZB der Ladeeinheiten 20, 22 der Lagenanschlag 36 zusammen mit der ersten Ladeeinheit 20 und der Gebindelage 7-2 in Überschubrichtung ÜR bewegt, während die zweite Ladeeinheit 22 entgegen der Überschubrichtung ÜR bewegt wird.

Weiterhin unterstützt der Lagenanschlag 36 die Vorderkante 70 der Gebindelage 7-2 auch bei der Überschubbewegung, mit der die Gebindelage 7-2 durch eine Bewegung des Schubbalkens 30 in Überschubrichtung ÜR zur Hälfte auf von der ersten Ladeeinheit 20 auf die zweite Ladeeinheit 22 übergeschoben wird (Figur 37).

Während des Auseinanderfahrens der ersten Ladeeinheit 20 und der zweiten Ladeeinheit 22 gemäß Figur 38 zum Absetzen der Gebindelage 7-2 auf der auf einer Palette angeordneten Gebindelage 7-1 verbleiben der Lagenanschlag 36 und der Schubbalken 30 in ihrer Position und begrenzen und/oder stabilisieren weiterhin die Vorderkante 70 und die Hinterkante 71 der Gebindelage 7-2. Diese Figuren verdeutlichen somit noch einmal, dass der Lagenanschlag 36 und der Schubbalken 30 jeweils unabhängig von der ersten und/oder der zweiten Ladeeinheit 20, 22 bewegt werden können.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind. Die Erfindung wurde unter Bezugnahme auf bevorzugte Ausführungsformen beschrieben. Es ist für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezugszeichenliste

- 1: Beladestation
- 1d: demontierte Beladestation
- 2: Palettenzu- und abtransporteinrichtung
- 3: Zwischenlagen- Einleger
- 4: Hubschlitten
- 5: Hubsäule
- 6: Palette
- 7, 7-1, 7-2, 7-3, 7-4: Gebindelage; palettierfähige Lage
- 8: Lagenvorbereitungs- und bereitstellungsmodul
- 9: Steuerungseinrichtung
- 10: Palettiervorrichtung
- 11: Schaltschrank
- 12: Bodenrahmen
- 13: Abstandsrahmenelement
- 14: Abstandsrahmenelement
- 15: Öffnung
- 16: abstützendes Rahmenelement
- 17: Querverbindung
- 18: Funktionseinheit
- 20: erste Ladeeinheit
- 21: Ganzschicht- Beladeplatte
- 22: zweite Ladeeinheit
- 23: Halbschicht- Beladeplatte
- 25: Auflageebene
- 26: erste Kante
- 27: zweite Kante
- 30: Schubbalken
- 31: Drehgelenk
- 35: Anschlagelement
- 36: Lagenanschlag
- 40: Antrieb
- 41: Kette
- 42: Umlaufbahn
- 50: Palettenzuführungsrichtung
- 51: Palettenabtransportrichtung
- 60: Zuführeinrichtung
- 61: Gruppiermodul
- 62: Zwischenlagen- Vorseparierer
- 65: Manipulator
- 70: Vorderkante
- B7: Breite
- h20, h22: Normalhöhe
- h20(b): Beladehöhe
- TR: Transportrichtung
- ÜR: Überschubrichtung
- ZB: Zustellbewegung

## Patentansprüche

1. Vorrichtung zum Überführen mindestens einer palettierfähigen Lage (7) auf eine Ablage- und/oder Stapelfläche, die insbesondere durch eine Palette (6) gebildet sein kann, welche Vorrichtung zumindest umfasst:
- eine Bereitstellungsposition für mindestens eine palettierfähige Lage (7), die gebildet ist durch eine Mehrzahl von Stückgütern, die innerhalb eines definierten Raumes angeordnet sind,
- eine Beladestation (1), die eine erste Ladeeinheit (20) und eine zweite Ladeeinheit (22) umfasst, wobei die erste Ladeeinheit (20) zur Aufnahme einer vollständigen palettierfähigen Lage (7) ausgebildet ist,
- wobei die auf der ersten Ladeeinheit (20) aufgenommene palettierfähige Lage (7) teilweise von der ersten Ladeeinheit (20) auf die zweite Ladeeinheit (22) überführbar und/oder bewegbar ist, so dass die durch die erste Ladeeinheit (20) vollständig aufgenommene palettierfähige Lage (7) teilweise auf die zweite Ladeeinheit (22) übertritt und von der ersten Ladeeinheit (20) und der zweiten Ladeeinheit (22) gemeinsam getragen wird,
- wobei die erste Ladeeinheit (20) und die zweite Ladeeinheit (22) zum Absetzen der vollständigen palettierfähigen Lage (7) auf der Ablage- und/oder Stapelfläche und/oder auf einer Oberseite einer zuvor dort abgelegten und bereits palettierten Lage (7) voneinander distanzierbar sind, wobei der dadurch ausbildbare minimale Abstand zwischen der ersten Ladeeinheit (20) und der zweiten Ladeeinheit (22) zumindest einer Breite (B7) der zuvor darauf befindlichen palettierfähigen Lage (7) entspricht,
- wobei der ersten Ladeeinheit (20) sowie der zweiten Ladeeinheit (22) bewegliche Anlagebalken zur Stabilisierung und/oder zum Überschieben der Lage (7) zugeordnet sind,
- und wobei die beidseitig der abzusetzenden und/oder abgesetzten Lage (7) angreifenden Anlagebalken zumindest phasenweise nichtsynchron und/oder unabhängig voneinander beweglich sind, insbesondere in Bewegungsrichtungen parallel zur Transportrichtung (ÜR) der Überführbewegung der Lage (7) auf die erste Ladeeinheit (20), **dadurch gekennzeichnet, dass** die Anlagebalken bzw. der Lagenschieber (30) und der Lagenanschlag (35) jeweils an einer vertikal beweglichen Quertraverse (4) aufgehängt und gelagert sind, an der auch die erste Ladeeinheit (20) und die zweite Ladeeinheit (22) aufgehängt sind, wobei die erste Ladeeinheit (20), die zweite Ladeeinheit (22) und die Anlagebalken (30, 35) einseitig an der Quertraverse (4) angeordnet sind.

2. Vorrichtung nach Anspruch 1, bei der zumindest ein die Lage (7) in Richtung zur zweiten Ladeeinheit (22) schiebender Anlagebalken durch wenigstens einen ein- oder mehrteiligen Lagenschieber (30) gebildet ist.

3. Vorrichtung nach Anspruch 1 oder 2, bei dem zumindest ein an die Lage (7) anlegbarer und der sich in Richtung zur zweiten Ladeeinheit (22) bewegenden Lage (7) vorauseilender oder zumindest temporär oder phasenweise dort anliegender Anlagebalken durch wenigstens einen ein- oder mehrteiligen Lagenanschlag (35) gebildet ist.

4. Vorrichtung nach einem der vorherigen Ansprüche, bei dem die Quertraverse (4) an einer Hubsäule (5) mit vertikaler Längserstreckungsrichtung vertikal beweglich gelagert ist.

5. Vorrichtung nach einem der Ansprüche 2 bis 4, bei dem der Lagenschieber (30) über ein Höhenniveau einer auf die erste Ladeeinheit (20) und/oder zweite Ladeeinheit (22) zu überführenden und/oder bewegbaren Lage (7) gehoben und/oder geschwenkt werden kann.

6. Verfahren zum Überführen mindestens einer palettierfähigen Lage (7) auf eine Ablage- und/oder Stapelfläche, die insbesondere durch eine Palette (6) gebildet sein kann, welches Verfahren zumindest die folgenden Schritte in der angegebenen oder einer davon abweichenden Reihenfolge umfasst:
- Bereitstellen mindestens einer palettierfähigen Lage (7), gebildet durch eine Mehrzahl von Stückgütern, die innerhalb eines definierten Raumes angeordnet sind,
- Überführen der bereitgestellten palettierfähigen Lage (7) an eine erste Ladeeinheit (20), welche einen Bestandteil einer Beladestation (1) bildet und welche die palettierfähige Lage (7) vollständig aufnimmt,
- Bewegen der ersten Ladeeinheit (20) mitsamt der darauf aufgenommenen palettierfähigen Lage (7) in Richtung einer zweiten Ladeeinheit (22), die einen weiteren Bestandteil der Beladestation (1) bildet, und/oder Bewegen der durch die erste Ladeeinheit (20) aufgenommenen palettierfähigen Lage (7) in Richtung der zweiten Ladeeinheit (22), wobei die durch die erste Ladeeinheit (20) vollständig aufgenommene palettierfähige Lage (7) teilweise auf die zweite Ladeeinheit (22) übertritt und von der ersten Ladeeinheit (20) und der zweiten Ladeeinheit (22) gemeinsam getragen wird,
- wonach sich zum Absetzen der vollständigen palettierfähigen Lage (7) auf der Ablage- und/oder Stapelfläche und/oder auf einer Oberseite einer zuvor dort abgelegten und bereits palettierten Lage (7) die erste Ladeeinheit (20) und die zweite Ladeeinheit (22) voneinander distanzieren, wobei der dadurch gebildete Abstand zwischen der ersten Ladeeinheit (20) und der zweiten Ladeeinheit (22) zumindest einer Breite (B7) der zuvor darauf befindlichen palettierfähigen Lage (7) entspricht,
- wobei zumindest während des Auseinanderbewegens der ersten Ladeeinheit (20) und der zweiten Ladeeinheit (22) zum Zwecke des Absetzens der palettierfähigen Lage (7) an beiden Längsseiten der Lage (7), die sich quer zur Transportrichtung (ÜR) beim Überführen der Lage (7) auf die erste Ladeeinheit (20) befinden, jeweils bewegliche Anlagebalken angreifen und die Lage (7) während des Absetzens der Lage (7) auf der Ablage- und/oder Stapelfläche und/oder auf einer Oberseite einer zuvor dort abgelegten und bereits palettierten Lage (7) beidseitig stützen und/oder stabilisieren,
- und wobei die beidseitig der abzusetzenden und/oder abgesetzten Lage (7) angreifenden Anlagebalken zumindest phasenweise nichtsynchron und/oder unabhängig voneinander beweglich sind oder bewegt werden, insbesondere in Bewegungsrichtungen parallel zur Transportrichtung (ÜR) der Überführbewegung der Lage (7) auf die erste Ladeeinheit (20), **dadurch gekennzeichnet, dass** die Anlagebalken bzw. der Lagenschieber (30) und der Lagenanschlag (35) jeweils an einer vertikal beweglichen Quertraverse (4) aufgehängt und gelagert sind, an der auch die erste Ladeeinheit (20) und die zweite Ladeeinheit (22) aufgehängt sind, wobei die erste Ladeeinheit (20), die zweite Ladeeinheit (22) und die Anlagebalken (30, 35) einseitig an der Quertraverse (4) angeordnet sind.

7. Verfahren nach Anspruch 6, bei dem zumindest ein die Lage (7) in Richtung zur zweiten Ladeeinheit (22) schiebender Anlagebalken durch wenigstens einen ein- oder mehrteiligen Lagenschieber (30) gebildet ist, wobei der wenigstens eine ein- oder mehrteilige Lagenschieber (30) die Lage (7) in Richtung zur zweiten Ladeeinheit (22) schiebt und/oder überführt.

8. Verfahren nach Anspruch 6 oder 7, bei dem zumindest ein an die Lage (7) anlegbarer und der sich in Richtung zur zweiten Ladeeinheit (22) bewegenden Lage (7) vorauseilender oder zumindest temporär oder phasenweise dort anliegender Anlagebalken durch wenigstens einen ein- oder mehrteiligen Lagenanschlag (35) gebildet ist, wobei der wenigstens eine ein- oder mehrteilige Lagenanschlag (35) die Lage (7) während ihres Überschiebens in Richtung zur zweiten Ladeeinheit (22) stabilisiert und einzelne Artikel am Umkippen hindert.

9. Verfahren nach Anspruch 7 oder 8, bei dem der an einer Seite der Lage (7) anliegende Lagenschieber (30) sowie der an der gegenüber liegenden Seite der Lage (7) anliegende Lagenanschlag (35) gemeinsam die Lage (7) fixieren, wenn die Ladeeinheiten zum Absetzen der Lage (7) auseinander gefahren werden.

## Claims

1. An apparatus used to transfer at least one palletisable layer (7) onto a depositing area and/or stacking area, which can be formed, in particular, by a pallet (6), the apparatus comprising at least:
- a staging position for at least one palletisable layer (7), which is formed by a plurality of piece goods arranged within a defined space,
- a loading station (1), which comprises a first loading unit (20) and a second loading unit (22), wherein the first loading unit (20) is designed to accommodate a complete palletisable layer (7),
- wherein the palletisable layer (7) accommodated on the first loading unit (20) is partly transferable and/or movable from the first loading unit (20) onto the second loading unit (22) such that the palletisable layer (7) completely accommodated by the first loading unit (20) partly passes onto the second loading unit (22) and is carried by the first loading unit (20) and the second loading unit (22) together,
- wherein the first loading unit (20) and the second loading unit (22) are distanceable from each other for the purpose of the complete palletisable layer (7) to be put down on the depositing area and/or stacking area and/or on a top side of an already palletised layer (7) previously deposited there, wherein the thereby formable minimum distance between the first loading unit (20) and the second loading unit (22) corresponds to at least a width (B7) of the palletisable layer (7) previously located thereon,
- wherein the first loading unit (20) and the second loading unit (22) have movable contact bars for the stabilisation and/or transfer of the layer (7) assigned to them,
- and wherein the contact bars engaging on both sides with the layer (7), which is to be deposited and/or which is deposited, are movable at least in phases non-synchronously and/or independently of one another, in particular, in directions of movement parallel to the transport direction (ÜR) of the transfer movement of the layer (7) onto the first loading unit (20), **characterised in that** the contact bars or the layer slider (30) and the layer stop (35), as applicable, are each suspended from and mounted on a vertically movable crosspiece (4), from which the first loading unit (20) and the second loading unit (22) are also suspended, wherein the first loading unit (20), the second loading unit (22), and the contact bars (30, 35) are arranged on one side of the crosspiece (4).

2. The apparatus according to claim 1, in which at least one contact bar sliding the layer (7) toward the second loading unit (22) is formed by at least one single- or multi-part layer slider (30).

3. The apparatus according to claim 1 or 2, in which at least one contact bar, which is abuttable on the layer (7), and which precedes the layer (7) moving toward the second loading unit (22), or which at least temporarily or in phases abuts thereon, is formed by at least one single- or multi-part layer stop (35).

4. The apparatus according to one of the previous claims, in which the crosspiece (4) is mounted in a vertically movable manner on a lifting column (5) with a vertical direction of longitudinal extension.

5. The apparatus according to one of the claims 2 to 4, in which the layer slider (30) can be lifted and/or swivelled above a height level of a layer (7) to be transferred and/or moved on the first loading unit (20) and/or second loading unit (22).

6. A method used to transfer at least one palletisable layer (7) onto a depositing area and/or stacking area, which can be formed, in particular, by a pallet (6), the method comprising at least the following steps in the sequence indicated or in a sequence deviating therefrom:
- staging at least one palletisable layer (7), which is formed by a plurality of piece goods arranged within a defined space,
- transferring the staged palletisable layer (7) to a first loading unit (20), which forms a part of a loading station (1) and which completely accommodates the palletisable layer (7),
- moving the first loading unit (20) together with the thereon accommodated palletisable layer (7) toward a second loading unit (22), which forms another part of the loading station (1), and/or moving the palletisable layer (7) accommodated by the first loading unit (20) toward the second loading unit (22), wherein the palletisable layer (7) completely accommodated by the first loading unit (20) partly passes onto the second loading unit (22) and is carried by the first loading unit (20) and the second loading unit (22) together,
- whereupon the first loading unit (20) and the second loading unit (22) are distanced from each other for the purpose of the complete palletisable layer (7) to be put down on the depositing area and/or stacking area and/or on a top side of an already palletised layer (7) previously deposited there, wherein the thereby formed distance between the first loading unit (20) and the second loading unit (22) corresponds to at least a width (B7) of the palletisable layer (7) previously located thereon,
- wherein, at least while the first loading unit (20) and the second loading unit (22) are being moved apart for the purpose of the palletisable layer (7) to be put down, in each instance movable contact bars engage with both of the layer's (7) longitudinal sides, which are situated transverse to the transport direction (UR) while the layer (7) is being transferred onto the first loading unit (20), and the contact bars support and/or stabilise the layer (7) on both sides while the layer (7) is being put down on the depositing area and/or stacking area and/or on a top side of an already palletised layer (7) previously deposited there,
- and wherein the contact bars engaging on both sides with the layer (7), which is to be deposited and/or which is deposited, are movable or are moved at least in phases non-synchronously and/or independently of one another, in particular, in directions of movement parallel to the transport direction (UR) of the transfer movement of the layer (7) onto the first loading unit (20), **characterised in that** the contact bars or the layer slider (30) and the layer stop (35), as applicable, are each suspended from and mounted on a vertically movable crosspiece (4), from which the first loading unit (20) and the second loading unit (22) are also suspended, wherein the first loading unit (20), the second loading unit (22), and the contact bars (30, 35) are arranged on one side of the crosspiece (4).

7. The method according to claim 6, in which at least one contact bar sliding the layer (7) toward the second loading unit (22) is formed by at least one single- or multi-part layer slider (30), wherein the at least one single- or multi-part layer slider (30) slides and/or transfers the layer (7) toward the second loading unit (22).

8. The method according to claim 6 or 7, in which at least one contact bar, which is abuttable on the layer (7), and which precedes the layer (7) moving toward the second loading unit (22), or which at least temporarily or in phases abuts thereon, is formed by at least one single- or multi-part layer stop (35), wherein the at least one single- or multi-part layer stop (35) stabilises the layer (7) and prevents individual articles from falling over while the layer (7) is being transferred toward the second loading unit (22).

9. The method according to claim 7 or 8, in which the layer slider (30) abutting on one side of the layer (7) and the layer stop (35) abutting on the oppositely located side of the layer (7) together secure the layer (7) when the loading units are moved apart for the purpose of putting down the layer (7).

## Revendications

1. Dispositif de transfert d'au moins une couche palettisable (7) sur une surface de dépôt et/ou d'empilage qui peut être formée en particulier par une palette (6), lequel dispositif comprend au moins:
- une position de fourniture pour au moins une couche palettisable (7) qui est formée par une pluralité de produits de détail qui sont disposés à l'intérieur d'un espace défini,
- un poste de chargement (1) qui comprend une première unité de chargement (20) et une deuxième unité de chargement (22), dans lequel la première unité de chargement (20) est conçue pour recevoir une couche palettisable (7) complète,
- dans lequel la couche palettisable (7) reçue sur la première unité de chargement (20) peut être en partie transférée et/ou déplacée de la première unité de chargement (20) à/sur la deuxième unité de chargement (22) de sorte que la couche palettisable (7) reçue complètement par la première unité de chargement (20) passe en partie sur la deuxième unité de chargement (22) et est portée en commun par la première unité de chargement (20) et la deuxième unité de chargement (22),
- dans lequel la première unité de chargement (20) et la deuxième unité de chargement (22) peuvent être espacées l'une de l'autre pour déposer la couche palettisable (7) complète sur la surface de dépôt et/ou d'empilage et/ou sur une face supérieure d'une couche (7) qui y a été déposée préalablement et est déjà palettisée, dans lequel la distance minimale qui peut ainsi être formée entre la première unité de chargement (20) et la deuxième unité de chargement (22) correspond au moins à une largeur (B7) de la couche palettisable (7) située préalablement là-dessus,
- dans lequel des poutres d'appui mobiles destinées à stabiliser et/ou à transférer par poussée la couche (7) sont associées à la première unité de chargement (20) et à la deuxième unité de chargement (22),
- et dans lequel les poutres d'appui qui se prennent de part et d'autre de la couche (7) à déposer et/ou déposée peuvent être déplacées au moins par phases de manière non synchrone et/ou indépendante l'une de l'autre, en particulier dans des directions de déplacement parallèles à la direction de transport (ÜR) du mouvement de transfert de la couche (7) sur la première unité de chargement (20), **caractérisé par le fait que** les poutres d'appui ou bien le dispositif pousseur de couche (30) et la butée de couche (35) sont chacun suspendus et logés sur une traverse (4) verticalement déplaçable sur laquelle sont suspendues également la première unité de chargement (20) et la deuxième unité de chargement (22), dans lequel la première unité de chargement (20), la deuxième unité de chargement (22) et les poutres d'appui (30, 35) sont disposées d'un côté sur la traverse (4).

2. Dispositif selon la revendication 1, dans lequel au moins une poutre d'appui qui pousse la couche (7) en direction de la deuxième unité de chargement (22) est formée par au moins un dispositif pousseur de couche (30) en une ou plusieurs partie(s).

3. Dispositif selon la revendication 1 ou 2, dans lequel au moins une poutre d'appui qui peut être appliquée contre la couche (7) et qui est située en amont de la couche (7) se déplaçant en direction de la deuxième unité de chargement (22) ou s'applique contre celle-ci au moins temporairement ou par phases est formée par au moins une butée de couche (35) en une ou plusieurs partie(s).

4. Dispositif selon l'une quelconque des revendications précédentes, dans lequel la traverse (4) est logée sur une colonne de levage (5) à direction d'extension longitudinale verticale, de manière à être verticalement déplaçable.

5. Dispositif selon l'une quelconque des revendications 2 à 4, dans lequel ledit dispositif pousseur de couche (30) peut être soulevé et/ou pivoté au-dessus d'un niveau de hauteur d'une couche (7) à transférer et/ou à déplacer sur la première unité de chargement (20) et/ou de la deuxième unité de chargement (22).

6. Procédé de transfert d'au moins une couche palettisable (7) sur une surface de dépôt et/ou d'empilage qui peut être formée en particulier par une palette (6), lequel procédé comprend au moins les étapes suivantes dans l'ordre indiqué ou dans un ordre qui diffère de celui-ci:
- fournir au moins une couche palettisable (7) qui est formée par une pluralité de produits de détail qui sont disposés à l'intérieur d'un espace défini,
- transférer la couche palettisable (7) fournie à une première unité de chargement (20) qui constitue un composant d'un poste de chargement (1) et qui reçoit complètement la couche palettisable (7),
- déplacer la première unité de chargement (20) avec la couche palettisable (7) reçue sur celle-ci en direction d'une deuxième unité de chargement (22) qui constitue un autre composant du poste de chargement (1), et/ou déplacer la couche palettisable (7) reçue par la première unité de chargement (20) en direction de la deuxième unité de chargement (22), dans lequel la couche palettisable (7) reçue complètement par la première unité de chargement (20) passe en partie sur la deuxième unité de chargement (22) et est portée en commun par la première unité de chargement (20) et la deuxième unité de chargement (22),
- ce après quoi la première unité de chargement (20) et la deuxième unité de chargement (22) s'éloignent l'une de l'autre pour déposer la couche palettisable (7) complète sur la surface de dépôt et/ou d'empilage et/ou sur une face supérieure d'une couche (7) qui y a été déposée préalablement et est déjà palettisée, dans lequel la distance ainsi formée entre la première unité de chargement (20) et la deuxième unité de chargement (22) correspond au moins à une largeur (B7) de la couche palettisable (7) située préalablement là-dessus,
- dans lequel, au moins pendant que la première unité de chargement (20) et la deuxième unité de chargement (22) s'éloignent l'une de l'autre en vue de déposer la couche palettisable (7), des poutres d'appui respectivement mobiles se prennent sur les deux côtés longitudinaux de la couche (7), qui se trouvent transversalement à la direction de transport (ÜR) lors du transfert de la couche (7) sur la première unité de chargement (20), et appuient et/ou stabilisent des deux côtés la couche (7) lorsque la couche (7) est déposée sur la surface de dépôt et/ou d'empilage et/ou sur une face supérieure d'une couche (7) qui y a été déposée préalablement et est déjà palettisée,
- et dans lequel les poutres d'appui qui se prennent de part et d'autre de la couche (7) à déposer et/ou déposée sont déplaçables ou déplacées au moins par phases de manière non synchrone et/ou indépendante l'une de l'autre, en particulier dans des directions de déplacement parallèles à la direction de transport (ÜR) du mouvement de transfert de la couche (7) sur la première unité de chargement (20), **caractérisé par le fait que** les poutres d'appui ou bien le dispositif pousseur de couche (30) et la butée de couche (35) sont chacun suspendus et logés sur une traverse (4) verticalement déplaçable sur laquelle sont suspendues également la première unité de chargement (20) et la deuxième unité de chargement (22), dans lequel la première unité de chargement (20), la deuxième unité de chargement (22) et les poutres d'appui (30, 35) sont disposées d'un côté sur la traverse (4).

7. Procédé selon la revendication 6, dans lequel au moins une poutre d'appui qui pousse la couche (7) en direction de la deuxième unité de chargement (22) est formée par au moins un dispositif pousseur de couche (30) en une ou plusieurs partie(s), dans lequel ledit dispositif pousseur de couche (30) en une ou plusieurs partie(s) pousse et/ou transfère la couche (7) en direction de la deuxième unité de chargement (22).

8. Procédé selon la revendication 6 ou 7, dans lequel au moins une poutre d'appui qui peut être appliquée contre la couche (7) et qui est située en amont de la couche (7) se déplaçant en direction de la deuxième unité de chargement (22) ou s'applique contre celle-ci au moins temporairement ou par phases est formée par au moins une butée de couche (35) en une ou plusieurs partie(s), dans lequel ladite au moins une butée de couche (35) en une ou plusieurs partie(s) stabilise la couche (7) pendant qu'elle est transférée par poussée en direction de la deuxième unité de chargement (22) et empêche le basculement d'articles individuels.

9. Procédé selon la revendication 7 ou 8, dans lequel le dispositif pousseur de couche (30) qui s'applique contre un côté de la couche (7) ainsi que la butée de couche (35) qui s'applique contre le côté opposé de la couche (7) fixent ensemble la couche (7) lorsque les unités de chargement sont écartées pour déposer la couche (7).
